(19) Europäisches Patentamt / European Patent Office / Office européen des brevets

(11) **EP 3 721 279 B1**

(12) **EUROPÄISCHE PATENTSCHRIFT**

(45) Veröffentlichungstag und Bekanntmachung des Hinweises auf die Patenterteilung:
**08.09.2021 Patentblatt 2021/36**

(51) Int Cl.:
**G02B 27/14** (2006.01)   **G02B 21/00** (2006.01)

(21) Anmeldenummer: **18812114.9**

(22) Anmeldetag: **27.11.2018**

(86) Internationale Anmeldenummer:
**PCT/EP2018/082654**

(87) Internationale Veröffentlichungsnummer:
**WO 2019/110368 (13.06.2019 Gazette 2019/24)**

(54) **MIKROSKOPSYSTEM UND VERFAHREN ZUR MIKROSKOPISCHEN ABBILDUNG MIT EINEM SOLCHEN MIKROSKOPSYSTEM**

MICROSCOPE SYSTEM AND METHOD FOR MICROSCOPIC IMAGING BY MEANS OF A MICROSCOPE SYSTEM OF THIS TYPE

SYSTÈME DE MICROSCOPIE ET PROCÉDÉ DE REPRODUCTION MICROSCOPIQUE À L'AIDE D'UN TEL SYSTÈME DE MICROSCOPIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2017 DE 102017128776**
**04.12.2017 DE 102017128777**
**04.12.2017 DE 102017128778**
**28.09.2018 DE 102018124129**

(43) Veröffentlichungstag der Anmeldung:
**14.10.2020 Patentblatt 2020/42**

(73) Patentinhaber: **Leica Microsystems CMS GmbH 35578 Wetzlar (DE)**

(72) Erfinder:
• **MÜLLER-RENTZ, Arnold**
**65611 Brechen (DE)**
• **SCHULZ, Christian**
**35606 Solms-Albshausen (DE)**

(74) Vertreter: **DehnsGermany Partnerschaft von Patentanwälten**
**Postfach 33 04 29**
**80064 München (DE)**

(56) Entgegenhaltungen:
WO-A1-2017/174225    DE-A1-102016 102 209
US-A- 5 777 674    US-A1- 2009 323 192

**Beschreibung**

Die vorliegende Erfindung betrifft ein Mikroskopsystem mit einer ersten Detektionseinheit oder mit mehreren Detektionseinheiten, die eine erste und wenigstens eine zweite Detektionseinheit umfassen, insbesondere ein kombiniertes Weitfeld- und Konfokalmikroskopsystem, und ein Verfahren zur mikroskopischen Abbildung mit einem entsprechenden Mikroskopsystem gemäß den jeweiligen Oberbegriffen der unabhängigen Patentansprüche.

Stand der Technik

Die farbselektive Detektion ist für die Mikroskopie, insbesondere die Fluoreszenzmikroskopie, von hoher Bedeutung, da hierbei häufig mehrere Farbstoffe gleichzeitig in einer Probe verwendet werden. Zur farbselektiven Detektion in der Fluoreszenzmikroskopie und der Mikroskopie generell sind aus dem Stand der Technik mehrere unterschiedliche Verfahren und Vorrichtungen bekannt. Grundsätzlich lässt sich zwischen einer sequenziellen und einer gleichzeitigen bzw. parallelen Detektion mehrerer Farben bzw. Fluorophore unterscheiden. Wenngleich nachfolgend überwiegend auf die Fluoreszenzmikroskopie Bezug genommen wird, gelten die entsprechenden Erläuterungen auch für andere mikroskopische Untersuchungsverfahren. Die nachfolgenden Erläuterungen gelten ferner in gleicher Weise für Weitfeld- und Konfokalmikroskopsysteme.

Für eine sequenzielle Detektion können beispielsweise Monochromkameras verwendet werden. Um sicherzustellen, dass mittels dieser jeweils lediglich ein Fluoreszenzkanal detektiert wird, erfolgt eine Auswahl des jeweils zu detektierenden Fluoreszenzfarbstoffs beispielsweise durch das Einschalten eines jeweils passenden einbandigen Fluoreszenzteilerwürfels in die Auflichtachsenebene des Mikroskops. Auf diese Weise kann die jeweils korrekte Kombination aus Anregungs- und Emissionswellenlängenbereich sichergestellt werden. Ein Wechsel zwischen unterschiedlichen Anregungs- und Detektionsmodalitäten ist jedoch hierbei vergleichsweise langsam. Die Umschaltzeit zwischen den jeweiligen Emissionswellenlängenbereichen beträgt typischerweise ca. 300 bis 400 ms, was sich insbesondere für die Untersuchung beweglicher Objekte wie insbesondere lebender Zellen häufig als nicht ausreichend schnell erweist.

Um eine schnellere Detektion unter Verwendung einer einzelnen Monochromkamera zu ermöglichen, kann auch ein Mehrband-Fluoreszenzteilerwürfel eingesetzt werden, der alle in Frage kommenden Anregungswellenlängenbereiche zur Probe und entsprechend alle in Frage kommenden Emissionswellenlängenbereiche zur Kamera gelangen lässt. Die Auswahl des jeweils detektierten Fluoreszenzfarbstoffs kann dabei über ein schnell schaltbares Emissionsfilterrad zwischen Mikroskop und Kamera erfolgen. Gleichzeitig wird über ein ebenfalls schnell schaltbares Anregungsfilterrad oder eine schnell modulierbare Lichtquelle (z.B. LED) die Anregung passend ausgewählt. Als Nachteil entsprechender Verfahren und Vorrichtungen bleibt ihre teilweise, insbesondere bei Lebendzellexperimenten, immer noch nicht ausreichend schnelle Schaltzeit zwischen den unterschiedlichen Anregungs- und Detektionsmodalitäten.

Zur gleichzeitigen Detektion können auch Farbkameras mit Bayer- oder Foveon-Sensoren verwendet werden. Dabei kann ein Mehrband-Fluoreszenzteilerwürfel eingesetzt werden, der wie bei der soeben beschriebenen schnellen sequenziellen Detektion alle in Frage kommenden Anregungswellenlängenbereiche zur Probe und alle in Frage kommenden Emissionswellenlängenbereiche zur Kamera gelangen lässt. Die Farbfähigkeit der Kamera lässt die Detektion der verschiedenen Emissionswellenlängenbereiche in verschiedenen Farbkanälen zu. Der Nachteil an entsprechenden Verfahren und Vorrichtungen ist jedoch die geringe Detektionseffizienz, da jeder Kamerapixel nur einen Teil des in einem entsprechenden Bereich auftreffenden Beobachtungslichts detektieren kann: Bei einem Bayer-Sensor, in dem ein schachbrettartige Farbmaske eingesetzt wird, steht für die Detektion jeder einzelnen Farbe naturgemäß jeweils nur ein gewisser Teil der für die Gesamtsensitivität ausschlaggebenden Sensorfläche zur Verfügung. Ungeachtet der aufgrund der fehlenden Farbmaske theoretisch höheren Sensitivität eines Foveon-Sensors liefert dieser häufig in der Praxis keine Vorteile.

Zur gleichzeitigen Detektion können auch einzelne Monochromkameras eingesetzt werden. Wie zuvor kann dabei ein Mehrband-Fluoreszenzteilerwürfel eingesetzt werden, der alle in Frage kommenden Anregungswellenlängenbereiche zur Probe und alle in Frage kommenden Emissionswellenlängenbereiche zur Kamera gelangen lässt. Zwischen Mikroskop und Kamera wird jedoch ein optisches Zwischenmodul angeordnet, das das Zwischenbild des Mikroskops verkleinert und spektral teilt, so dass mehrere Kopien des Zwischenbildes in verschiedenen Spektralbereichen nebeneinander auf den Kamerasensor abgebildet werden. Zur spektralen Teilung werden in derartigen Anordnungen häufig wechselbare, dichroitische Teilerplättchen eingesetzt.

Schließlich können auch mehrere Monochromkameras zur Fluoreszenzdetektion eingesetzt werden. Wiederum kann ein Mehrband-Fluoreszenzteilerwürfel eingesetzt werden, der alle in Frage kommenden Anregungswellenlängenbereiche zur Probe und alle in Frage kommenden Emissionswellenlängenbereiche zu den Kameras gelangen lässt. Zwischen Mikroskop und Kamera wird hier ein optisches Zwischenmodul angeordnet, das das Zwischenbild des Mikroskops spektral teilt, so dass verschiedene Spektralbereiche auf verschiedene Kameras abgebildet werden. Auch hier können wechselbare, dichroitische Teilerplättchen bzw. entsprechende Teilerschichten eingesetzt werden.

Verfahren und Vorrichtungen der soeben beschriebenen Art sind unter anderem aus der WO 2016/166374 A1 und der WO 2016/166375 A1 der Anmelderin bekannt. Generell können zur spektralen Aufteilung des Zwischenbilds in entsprechenden Verfahren und Anordnungen Farbstrahlteileranordnungen eingesetzt werden, die insbesondere seit geraumer Zeit aus dem Bereich der Farbfernsehtechnik bekannt sind, die jedoch insbesondere in der Mikroskopie jeweils bestimmte Nachteile aufweisen können.

So führt beispielsweise ein sogenanntes Philips-Prisma, wie es in der US 3,659,918 A und der US 4,084,180 A für den Einsatz für eine Farbfernsehkamera beschrieben ist, zu einer verhältnismäßig langen optischen Wegstrecke in Glas. Ferner kann das Licht mittels eines Philips-Prismas nur in drei Kanäle aufgeteilt werden. Ein weiterer Nachteil wird bei Betrachtung der Figur 1 der US 4,084,180 A erkennbar, auf die sich die in diesem Absatz verwendeten Bezugszeichen beziehen, und auf die hier ausdrücklich verwiesen wird. Während hier der Strahl r1 nach der Reflexion an der Schicht 2 an der Grundfläche des Prismas A totalreflektiert werden kann und somit im Idealfall keine verspiegelnde Beschichtung notwendig ist, muss für Strahl r2 die Grenzfläche für die Transmission von A nach B zunächst durchlässig sein, dann aber für das an der Schicht 1 reflektierte Licht reflektierend wirken. Eine entsprechende Beschichtung kann daher möglicherweise zu beträchtlichen Lichtverlusten aufgrund von Streuung führen.

Ein aus der US 2009/0323192 A1 bekannter Farbstrahlteiler kann aufgrund seiner Größe zu Bauraumproblemen führen und weist ebenfalls den Nachteil langer Glaswege auf. Aufgrund der Vielzahl verwendeter optischer Elemente ist die Herstellung und Justage aufwendig und teuer. Die Vielzahl an Grenzflächen kann ebenfalls zu Lichtverlusten und Streuung führen.

Aus der DE 10 2008 062 791 A1 ist ferner ein Mikroskop mit einem Strahlteilerwürfel (einem sogenannten X-Cube) bekannt, der insgesamt vier Prismen umfasst. Eine entsprechende Anordnung für eine Kamera ist auch beispielsweise in der US 8,988,564 B2 gezeigt. Die in dem Strahlteilerwürfel unter 45° erfolgende Ablenkung ist allerdings sehr stark polarisationsabhängig und damit nachteilig. Auch kann die Positionierung von Prismenkanten im Strahlengang zu Streuung und Lichtverlusten führen

Andere Farbstrahlteilereinrichtungen, die aus dem Stand der Technik bekannt sind, erfordern weitere aufwendige Komponenten wie beispielsweise eine Relayoptik, oder sind insbesondere aus baulichen oder optischen Gründen für den Einsatz in der Mikroskopie untauglich oder nachteilig.

Aufgabe der vorliegenden Erfindung ist vor diesem Hintergrund, eine zeitgleiche, multispektrale, weitgehend verlustfreie Aufnahme mehrerer Fluorophore in einem Mikroskop zu ermöglichen. Insbesondere sollen im Rahmen der vorliegenden Erfindung ein Mikroskopsystem mit einer gegenüber dem Stand der Technik verbesserten Farbstrahlteileranordnung und ein entsprechendes Verfahren bereitgestellt werden.

Offenbarung der Erfindung

Vor diesem Hintergrund schlägt die vorliegende Erfindung ein Mikroskopsystem und ein Verfahren zur mikroskopischen Abbildung unter Verwendung eines derartigen Mikroskopsystems mit den Merkmalen der jeweiligen unabhängigen Patentansprüche vor. Bevorzugte Ausgestaltungen sind jeweils Gegenstand der abhängigen Patentansprüche sowie der nachfolgenden Beschreibung.

Die vorliegende Erfindung schlägt ein Mikroskopsystem mit einer ersten Detektionseinheit oder mit mehreren Detektionseinheiten, die eine erste Detektionseinheit und wenigstens eine zweite Detektionseinheit umfassen, vor. Eine entsprechende Detektionseinheit kann insbesondere als Mehrdetektormodul oder als Teil eines Mehrdetektormoduls mit mehreren Detektoren zur parallelen Detektion ausgebildet sein. Ein entsprechendes Mehrdetektormodul umfasst dabei insbesondere einen optischen Adapter, der an einem Detektionsabgang eines Mikroskops anbringbar ist, sowie mehrere Ausgänge zur Ankopplung mehrerer Detektoren bzw. die entsprechenden Detektoren selbst. Das Mehrdetektormodul kann beispielsweise mit Monochromkameras oder anderen Detektoren gekoppelt oder baulich für eine entsprechende Kopplung eingerichtet sein. Es können auch mehrere mechanisch-optische Schnittstellen zur, insbesondere werkzeugfrei, lösbaren Kopplung mit entsprechenden Kameras bereitgestellt sein. Wie auch nachfolgend noch erläutert, werden die Begriffe "Sensor", "Kamera" und "Detektor" hier weitgehend synonym verwendet. Da die vorliegende Erfindung gleichermaßen im Zusammenhang mit Weitfeldmikroskopsystemen und Konfokalmikroskopsystemen zum Einsatz kommen kann bzw. in einer Ausgestaltung der vorliegenden Erfindung ein kombiniertes Weitfeld- und Konfokalmikroskopsystem geschaffen wird, kann es sich bei entsprechenden Detektoren um Kameras, die eine zweidimensionale Detektion in einer Bildebene ermöglichen, also um Flächendetektoren, aber auch um eindimensionale Detektoren, die lediglich eine Intensität des jeweils eintreffenden Lichtstrahls messen, also Punktdetektoren, handeln.

Die spektrale Aufteilung von Beobachtungslicht des Mikroskops erfolgt über nachfolgend im Detail erläuterte Prismen in der Farbstrahlteileranordnung, wobei in einer Farbstrahlteileranordnung jeweils drei Prismen, nachfolgend als Strahlteilerprismen bezeichnet, mit zueinander unterschiedliche spektrale Selektivitäten aufweisenden dichroitischen Schichten bzw. Beschichtungen vorgesehen sind.

Der erwähnte Adapter kann insbesondere derart ausgebildet sein, dass er das Zwischenbild des Mikroskops so weit vergrößert, dass es der Sensorgröße der verwendeten Kameras zumindest weitgehend entspricht, falls Kameras als Detektoren verwendet werden. Er weist insbesondere eine Schlussschnittweite auf, die groß genug ist, um die Farbstrahlteileranordnung zwischen Adapter und Kamera einbauen zu können. Falls keine Vergrößerungsanpassung erforderlich ist, kann der Adapter auch nur aus einem rein mechanischen Element zum Einhalten des korrekten Abstandes zu den Kameras bestehen.

Die vorliegende Erfindung sieht ein Mikroskopsystem mit einer ersten Detektionseinheit oder mit mehreren Detektionseinheiten, die eine erste und wenigstens eine zweite Detektionseinheit umfassen, vor. Beispielsweise können genau zwei Detektionseinheiten, nämlich die erste und eine zweite Detektionseinheit vorgesehen sein. Die erste Detektionseinheit oder zumindest eine der mehreren Detektionseinheiten weist bzw. weisen eine Farbstrahlteileranordnung mit drei hintereinander angeordneten Strahlteilerprismen auf. Es versteht sich, dass weitere Detektionseinheiten vorhanden sein können, die keine entsprechenden Farbstrahlteileranordnungen aufweisen müssen.

Ist nachfolgend von einer "erfindungsgemäßen Farbstrahlteileranordnung" die Rede, sei dabei eine Farbstrahlteileranordnung verstanden, die Teil einer Detektionseinheit eines erfindungsgemäßen Mikroskopsystems ist. Mit anderen Worten gelten die nachfolgend zu einer derartigen Farbstrahlteileranordnung getroffenen Erläuterungen für das erfindungsgemäße Mikroskopsystem bzw. dessen Detektionseinheit oder Detektionseinheiten in gleicher Weise.

Die mehreren Strahlteilerprismen, deren Anzahl erfindungsgemäß drei beträgt, weisen jeweils eine erste, eine zweite und eine dritte Prismenfläche auf. Es versteht sich, dass neben den drei nachfolgend im Detail erläuterten Strahlteilerprismen noch weitere Strahlteilerprismen und andere Prismen ohne Strahlteilereigenschaften vorhanden sein können.

Im Rahmen der vorliegenden Erfindung ist pro Strahlteilerprisma eine dichroitische Schicht vorgesehen, wobei eine dichroitische Schicht auf oder parallel zu jeder der zweiten Prismenflächen der Strahlteilerprismen bereitgestellt ist. Auch in diesem Zusammenhang versteht sich, dass zusätzlich zu den spezifisch erwähnten auch noch weitere dichroitische Schichten vorhanden sein können.

Erfindungsgemäß weisen die ersten Prismenflächen der Strahlteilerprismen in der Farbstrahlteileranordnung in dieselbe Richtung. Die ersten Prismenflächen der Strahlteilerprismen sind ferner erfindungsgemäß parallel zueinander und in einem rechten Winkel zu einer gemeinsamen optischen Achse ausgerichtet, die durch die ersten und zweiten Prismenflächen der Strahlteilerprismen verläuft. Werden, wie nachfolgend erläutert, als die Strahlteilerprismen jeweils Bauernfeind-Prismen eingesetzt, handelt es sich dabei bei den "ersten Prismenflächen" um die Grundflächen, also die größten Flächen, entsprechender Bauernfeindprismen.

Die vorliegende Erfindung unterscheidet sich vom Stand der Technik, beispielsweise der DE 24 46 923 A1, bereits dadurch, dass hier ein Einsatz der Prismenanordnung in der Mikroskopie und nicht in der konventionellen Fernsehtechnik vorgeschlagen wird. In der Mikroskopie sind die Anforderungen an Präzision und Abbildungsqualität und Bauraum deutlich höher als in der zum Zeitpunkt der Veröffentlichung der DE 24 46 923 A1 und anderer Druckschriften generell niedrig auflösenden Fernsehtechnik. Der Fachmann hätte daher insbesondere ältere Druckschriften aus dem Bereich der Fernsehtechnik nicht als relevant für den Einsatz in der Mikroskopie erachtet.

Ferner ist in der Fernsehtechnik grundsätzlich nur eine Aufspaltung von Licht in drei Farbkanäle (rot, grün, blau; RGB) erforderlich, nicht jedoch wie in der Mikroskopie in mehr als drei Farbkanäle mit jeweils einem gewünschten Wellenlängenbereich. Folgerichtig ist auch in der DE 24 46 923 A1 und anderen Druckschriften eine entsprechende Ausgestaltung vorgesehen; jedenfalls aber nicht der Einsatz von drei Strahlteilerprismen wie sie die vorliegende Erfindung vorschlägt. Ausgehend vom Stand der Technik aus dem Bereich der Fernsehtechnik bestand kein Anlass, eine entsprechende Erweiterung vorzunehmen.

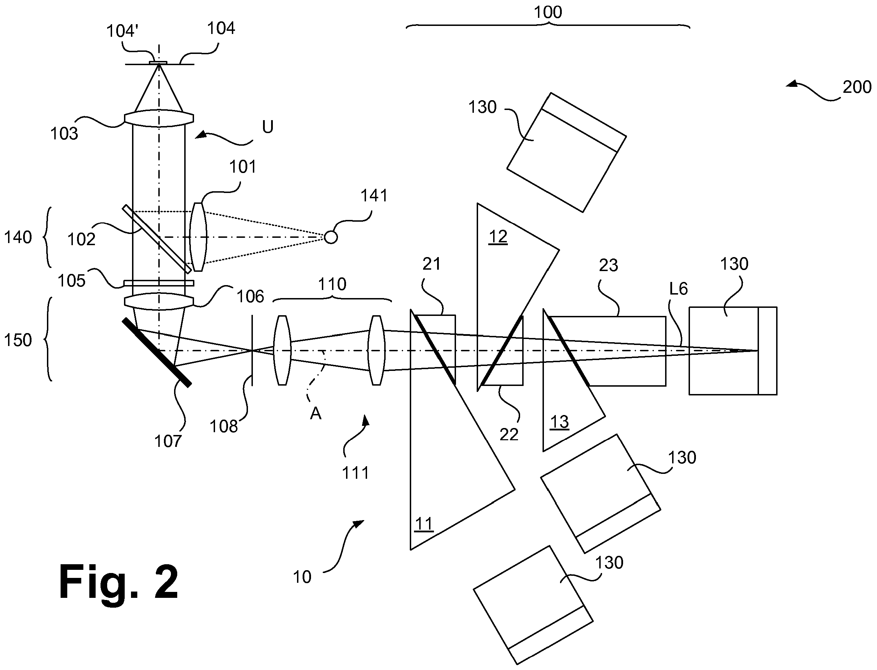

Schließlich ist in der DE 24 46 923 A1 auch keine Anordnung offenbart, in der erste Prismenflächen der Strahlteilerprismen parallel zueinander und in einem rechten Winkel zu einer gemeinsamen optischen Achse ausgerichtet sind. Vielmehr sind hier die Lichteintrittsflächen der in Figur 2 gezeigten Prismen 7 und 9 jeweils gegenüber der optischen Achse geneigt, was durch eine gegenläufige Neigung der Lichtaustrittsflächen der Prismen 8 und 10 kompensiert wird. Hierdurch ergeben sich Nachteile durch eine erhöhte chromatische Aberration und Streuungsverluste.

Unter der hier verwendeten Angabe, dass Prismenflächen "in dieselbe Richtung" weisen, sei verstanden, dass die Abfolge von dem optisch weniger dichten nach dem optisch dichteren Medium (insbesondere Luft als optisch weniger dichtem Medium nach Glas bzw. einem anderen Werkstoff der Strahlteilerprismen als optisch dichterem Medium) über die erste Prismenfläche als Grenzfläche in einer Richtung entlang der gemeinsamen optischen Achse bezüglich eines jeden der Strahlteilerprismen jeweils dieselbe ist. Grundsätzlich handelt es sich bei den hier als "Prismenflächen" bezeichneten Flächen um die drei oder mehr Flächen eines Strahlteilerprismas, die senkrecht zu einer gemeinsamen Bezugsebene stehen. Entsprechende Strahlteilerprismen weisen auch weitere Flächen auf, beispielsweise ein Bauernfeind-Prisma die im Wesentlichen dreieckigen Seitenflächen. Diese stehen aber nicht senkrecht zu der genannten gemeinsamen Bezugsebene, sondern liegen insbesondere parallel zu dieser. Sie werden ferner nicht optisch genutzt und können beispielsweise mattiert sein, um unerwünschte Reflexionen und damit Störlicht zu vermeiden.

Ferner ist erfindungsgemäß vorgesehen, dass die ersten und zweiten Prismenflächen jeweils in spitzen ersten Winkeln, die zweiten und dritten Prismenflächen jeweils in rechten oder stumpfen zweiten Winkeln, und die dritten und ersten Prismenflächen jeweils in spitzen dritten Winkeln zueinander ausgerichtet sind. Bei den erläuterten Winkeln handelt es sich jeweils um Winkel zwischen Ebenen, in denen die jeweiligen Prismenflächen liegen, und um Prismeninnenwinkel. Die jeweils benannten Prismenflächen müssen nicht direkt aneinanderstoßen, sondern können, insbesondere aus Fertigungsgründen, eine dazwischen angeordnete Fase aufweisen. Sie liegen jedoch jeweils in entsprechenden Ebenen.

Mit der Angabe, dass "jeweils" die genannten Winkel vorliegen, wird hier ausgedrückt, dass die Winkelangaben sich auf jedes der Strahlteilerprismen gesondert beziehen. Mit anderen Worten sind bei einem ersten Strahlteilerprisma die erste und zweite Prismenfläche in einem spitzen ersten Winkel, die zweite und dritte Prismenflächen in einem rechten oder stumpfen zweiten Winkel und die dritte und erste Prismenflächen in einem spitzen dritten Winkel zueinander ausgerichtet. Entsprechend sind bei einem zweiten Strahlteilerprisma die erste und zweite Prismenflächen in einem spitzen ersten Winkel, die zweite und dritte Prismenfläche in einem rechten oder stumpfen zweiten Winkel und die dritte und erste Prismenflächen in einem spitzen dritten Winkel zueinander ausgerichtet. Ferner sind auch bei einem dritten Strahlteilerprisma die erste und zweite Prismenfläche in einem spitzen ersten Winkel, zweite und dritte Prismenflächen in einem rechten oder stumpfen zweiten Winkel und die dritte und erste Prismenfläche in einem spitzen dritten Winkel zueinander ausgerichtet. Die erste Prismenfläche des ersten Strahlteilerprismas muss jedoch beispielsweise nicht notwendigerweise in einem spitzen ersten Winkel zu der zweiten Prismenfläche des zweiten und/oder dritten Strahlteilerprismas ausgerichtet sein.

Die ersten, zweiten und dritten Prismenflächen jeweils eines Prismas stehen dabei, wie bereits soeben erwähnt, senkrecht zu einer Bezugsebene. Die ersten Winkel können dabei für unterschiedliche Strahlteilerprismen auch grundsätzlich unterschiedliche Winkelbeträge aufweisen. Entsprechendes gilt auch für die zweiten und dritten Winkel. Mit anderen Worten können die Strahlteilerprismen also Geometrien aufweisen, deren Unterschiede sich nicht auf eine reine Vergrößerung und Verkleinerung unter Beibehaltung der Prismenwinkel beschränken, sondern die zusätzlich auch unterschiedliche Prismenwinkel umfassen können.

In Ausgestaltungen der vorliegenden Erfindung können die einzelnen Strahlteilerprismen insbesondere auch um die gemeinsame optische Achse zueinander verdreht sein. Die Verdrehung ist dabei als Drehung um eine Drehachse zu verstehen, die der gemeinsamen optischen Achse entspricht. Die erste Prismenfläche eines jeden Strahlteilerprismas kann dabei unabhängig von anderen Strahlteilerprismen in einer ersten Ebene, die zweite Prismenfläche eines jeden Strahlteilerprismas unabhängig von dem oder den anderen Strahlteilerprismen in einer zweiten Ebene und die dritte Prismenfläche eines jeden Strahlteilerprismas unabhängig von dem oder den anderen Strahlteilerprismen in einer dritten Ebene angeordnet sein. Bei jedem Strahlteilerprisma schneiden sich die erste und die zweite Ebene dann in einer ersten Schnittgeraden, die zweite und dritte Ebene in einer zweiten Schnittgeraden und die erste und dritte Ebene in einer dritten Schnittgeraden. Vereinfachend und zur Vermeidung weitschweifiger Formulierungen wird nachfolgend anstelle von Schnittgeraden, die durch einander schneidende Ebenen gebildet werden, in denen Prismenflächen eines Strahlteilerprismas liegen, jeweils von Schnittgeraden "des" jeweiligen Strahlteilerprismas gesprochen. Die erste, zweite und dritte Schnittgerade jedes Prismas verlaufen dabei parallel im Raum, die jeweiligen Schnittgeraden unterschiedlicher Strahlteilerprismen können jedoch auch windschief zueinander im Raum stehen. Die spezifische Wahl der Anordnungen richtet sich insbesondere nach den baulichen Vorgaben bzw. Limitationen.

Insbesondere können die Strahlteilerprismen jeweils um 180° um die optische Achse verdreht zueinander angeordnet sein. In diesem Fall liegen die ersten Schnittgeraden zweier Strahlteilerprismen bei Projektion entlang der gemeinsamen optischen Achse auf eine Projektionsebene, die parallel zu den ersten Prismenflächen liegt, parallel zueinander, jedoch auf unterschiedlichen Seiten einer Bezugsgeraden, die ebenfalls parallel zu den ersten Schnittgeraden in der Projektionsebene liegt, und die durch den Schnittpunkt der gemeinsamen optischen Achse mit der ersten Ebene verläuft. Entsprechendes gilt auch für die zweite und die dritte Schnittgerade dieser jeweiligen Strahlteilerprismen.

Insbesondere kann, wenn ein erstes, ein zweites und ein drittes Strahlteilerprisma verwendet werden, die erste Schnittgerade eines ersten der Strahlteilerprismen auf einer ersten Seite der Bezugsgeraden, die erste Schnittgerade eines zweiten der Strahlteilerprismen auf einer zweiten Seite der Bezugsgeraden und die erste Schnittgerade eines dritten der Strahlteilerprismen wiederum auf der ersten Seite der Bezugsgeraden liegen. Die ersten Schnittgeraden des ersten, des zweiten und des dritten Strahlteilerprismas verlaufen parallel zueinander im Raum. Entsprechendes gilt auch wiederum für die zweite und die dritte Schnittgerade dieser jeweiligen Strahlteilerprismen. Die Reihenfolge des ersten, zweiten und dritten Strahlteilerprismas ist dabei im Rahmen der vorliegenden Erfindung derart, dass die gemeinsame optische Achse nacheinander durch die erste Prismenfläche und die zweite Prismenfläche des ersten Strahlteilerprismas, die erste und die zweite Prismenfläche des zweiten Strahlteilerprismas und die erste und die zweite Prismenfläche des dritten Strahlteilerprismas verläuft.

Im Rahmen der vorliegenden Erfindung verläuft die gemeinsame optische Achse generell, ungeachtet der Orientierung der einzelnen Strahlteilerprismen um die gemeinsame optische Achse, durch die ersten und zweiten Prismenflächen der Strahlteilerprismen, und die dichroitischen Schichten, die unterschiedliche spektrale Selektivitäten aufweisen, sind jeweils auf die zweiten Prismenflächen aufgebracht oder parallel dazu, insbesondere in einem vorbestimmten Abstand hiervon, angeordnet. Jede der dichroitischen Schichten weist dabei insbesondere eine einheitliche und jeweils von den anderen dichroitischen Beschichtungen abweichende spektrale Selektivität auf. Eine dichroitische Schicht kann insbesondere in Form einer oder mehrerer Metalloxidschichten auf ein Prisma bzw. eine Prismenfläche aufgebracht sein. Die Begriffe "Schicht" und "Beschichtung" werden dabei hier synonym verwendet.

Es ist neben einer direkten Beschichtung von Prismenflächen, hier der zweiten Prismenflächen, grundsätzlich auch möglich, separate, beispielsweise planparallele, Elemente mit entsprechenden dichroitischen Schichten bereitzustellen. Entsprechende separate Elemente können in einem definierten Abstand von beispielsweise 5 $\mu$m oder mehr zu einer entsprechenden Prismenfläche angeordnet sein. Durch eine derartige Anordnung, in der ein Luftspalt zwischen der dichroitischen Schicht und der entsprechenden Prismenfläche ausgebildet wird und damit ein starker Unterschied in den Brechungsindices besteht, lässt sich ggf. die Strahlteilung vorteilhaft gestalten.

Durch eine entsprechende Anordnung kann Licht, das in Form eines bezüglich der gemeinsamen optischen Achse zentrierten, insbesondere mit diesem konzentrischen, Lichtbündels, insbesondere konvergent, in Richtung der ersten Prismenfläche des ersten Strahlteilerprismas in die Farbstrahlteileranordnung eingestrahlt wird, an den jeweiligen dichroitischen Schichten auf oder an den zweiten Prismenflächen der Strahlteilerprismen spektral selektiv reflektiert werden. Aufgrund der Anordnung der ersten und zweiten Prismenflächen in dem ersten Winkel zueinander werden entsprechend reflektierte Anteile, soweit vorhanden, auf die ersten Prismenflächen zurückgestrahlt, wo sie insbesondere totalreflektiert und, durch die dritten Prismenflächen tretend, aus den jeweiligen Strahlteilerprismen ausgestrahlt werden können.

Diese jeweiligen Anteile können dann, nach optionaler zusätzlicher weiterer Filterung, beispielsweise mittels eines Bandpassfilters, in eine Kamera bzw. einen entsprechenden Detektor eingestrahlt und dort jeweils detektiert werden. Entsprechend passieren spektrale Anteile des in die jeweiligen Prismen eintretenden Lichts, die an den jeweiligen dichroitischen Schichten auf oder an den zweiten Prismenflächen nicht reflektiert werden, diese, und treten aus den Strahlteilerprismen aus. Diese Anteile können anschließend detektiert werden oder in ein weiteres der Strahlteilerprismen gelangen, wo sie erneut auf eine die dichroitischen Schichten auf oder an einer zweiten Prismenfläche treffen, die jedoch eine abweichende spektrale Selektivität aufweist

Die erfindungsgemäß vorgeschlagene Farbstrahlteileranordnung umfasst also, mit anderen Worten, mehrere (mindestens drei) im Strahlengang hintereinander liegende Strahlteilerprismen mit dichroitischen Schichten, die jedem Teilstrahlengang einen Wellenlängenbereich zuweisen. Für jeden Wellenlängenbereich kann dabei ein Detektor zur Detektion verwendet werden. Durch den Einsatz der vorliegenden Erfindung können unterschiedliche spektrale Anteile von in die Strahlteileranordnung eingestrahltem Licht durch entsprechend einfache, kostengünstige und empfindliche Monochromdetektoren, beispielsweise Monochromkameras, erfasst werden. Eine Verwendung von Mehrfarbdetektoren ist daher nicht notwendigerweise erforderlich, kann aber gleichwohl vorgesehen sein.

Insgesamt wird typischerweise ein Strahlteilerprisma weniger als die Anzahl der eingesetzten Detektoren und damit der zu detektierenden Wellenlängenbereiche benötigt, da der nach der "letzten" dichroitischen Schicht der durchstrahlten Strahlteilerprismen verbleibende Lichtanteil vorteilhafterweise ebenfalls als entsprechender Wellenlängenbereich detektiert werden kann.

Erfindungsgemäß ist ferner eine Anzahl von prismatischen Ausgleichselementen in einer Detektionseinheit vorgesehen. Ein "prismatisches" Ausgleichselement zeichnet sich dabei durch eine Prismenwirkung aus. Dies bedeutet, dass die entsprechenden Ausgleichselemente im Gegensatz zu planparallelen optischen Elementen zueinander in einem Winkel angeordnete Ein- und Austrittsflächen aufweisen Bei den Ein- und Austrittsflächen handelt es sich insbesondere um die nachfolgend erläuterte ersten und zweiten Prismenflächen der Ausgleichselemente. Die Ein- und Austrittsflächen sind also nicht parallel zueinander angeordnet. Jedes der Ausgleichselemente umfasst ein oder mehrere Ausgleichsprismen. Mit anderen Worten kann es sich bei einem Ausgleichselement im einfachsten Fall, der auch in den beigefügten Zeichnungen dargestellt ist, um ein Ausgleichsprisma handeln. Weist ein Ausgleichselement mehrere Ausgleichsprismen auf, weisen diese insbesondere zumindest teilweise einen Flächenkontakt zueinander auf, sind also ohne Luftspalte zusammengesetzt und insbesondere miteinander verkittet. Bei einer Verkittung wird der Flächenkontakt über die Kittschicht hergestellt. Jedem der mehreren Strahlteilerprismen ist dabei jeweils ein Ausgleichselement zugeordnet. Die Ausgleichselemente weisen jeweils eine erste und eine zweite Prismenfläche auf. Ist ein Ausgleichselement aus mehreren Ausgleichsprismen aufgebaut, können diese Prismenflächen jeweils auch Prismenflächen unterschiedlicher Ausgleichsprismen eines Ausgleichselements sein.

Durch die Verwendung der Ausgleichselemente kann insbesondere sichergestellt werden, wie auch nachfolgend erläutert, dass die in der Farbstrahlteileranordnung gebildeten spektralen Lichtanteile in der Farbstrahlteileranordnung und bis zu ihrer jeweiligen Detektion identische oder, wie nachfolgend erläutert, um nicht mehr als einen vorbestimmten Betrag voneinander abweichende Glaswege zurücklegen. Ein "Glasweg" ist dabei die Strecke, die das Licht in Glas, im vorliegenden Fall insbesondere in einem oder mehreren Strahlteilerprismen und einem oder mehreren Ausgleichsprismen eines oder mehrerer Ausgleichselemente, zurücklegt. Es versteht sich, dass neben den Ausgleichsprismen der Ausgleichselemente und den Strahlteilerprismen in einer in einem erfindungsgemäßen Mikroskopsystem eingesetzten Detektionseinheit auch ggf. beliebige weitere Prismen vorhanden sein können.

Im Rahmen der vorliegenden Erfindung ist die zweite Prismenfläche eines jeden der Ausgleichselemente in einer gemeinsamen Ebene mit oder parallel zu der zweiten Prismenfläche des jeweils zugeordneten Strahlteilerprismas angeordnet. Eine erfindungsgemäße Anordnung umfasst ferner vorteilhafterweise, dass die erste Prismenfläche eines jeden Ausgleichselements parallel zu der ersten Prismenfläche des ihm jeweils zugeordneten Strahlteilerprismas angeordnet ist. Auf diese Weise kann jeweils ein senkrechter Austritt des Lichts aus der jeweils ersten Prismenfläche der Ausgleichselemente bewirkt werden. Wie bereits erwähnt, ist eine derartige Anordnung im Stand der Technik, beispielsweise in der DE 24 46 923 A1, nicht vorgesehen, da dort entsprechende Flächen gegenüber einer optischen Achse schräg angeordnet sind.

Grundsätzlich kann das Mikroskopsystem im Rahmen der vorliegenden Erfindung als Weitfeld- oder als ein Konfokalmikroskopsystem ausgebildet werden und weist hierzu entsprechende Strahlengänge auf. Eine besonders vorteilhafte Ausgestaltung der vorliegenden Erfindung betrifft ein kombiniertes Weitfeld- und Konfokalmikroskopsystem, in dem beide Strahlengänge vorhanden sind.

Die Weitfeld- und die Konfokalmikroskopie unterscheiden sich bekanntermaßen insbesondere durch den Anteil der Probe, die jeweils beleuchtet und mittels einer Kamera bzw. mittels eines Detektors erfasst wird.

In der Weitfeldmikroskopie wird die Probe im Wesentlichen flächig ausgeleuchtet. Daher weist ein entsprechendes Weitfeldmikroskopsystem eine Lichtquelle auf, die im Zusammenhang mit der verwendeten Beleuchtungsoptik für diese flächige Ausleuchtung einer Probe bzw. eines Teils einer Objektebene, in der sich die Probe befindet, eingerichtet ist. Entsprechend erfolgt auch eine flächige Erfassung des Probenlichts, typischerweise mittels der erwähnten zweidimensionalen Kameras.

Hingegen wird in der Konfokalmikroskopie die Probe punkt- oder linienförmig unter Verwendung eines oder mehrerer eng begrenzter, fokussierter Lichtpunkte oder einer oder mehrerer Lichtlinien abgerastert. In der Konfokalmikroskopie wird also zu keinem Zeitpunkt eine derart große Fläche der Probe beleuchtet, wie dies in einem Weitfeldmikroskopsystem der Fall ist. Nachfolgend wird dabei insbesondere der Fall einer punktförmigen Abtastung beschrieben.

In der Konfokalmikroskopie wird eine mit der Beleuchtung korrespondierende punkt- bzw. linienförmige Detektion vorgenommen. Im Strahlengang des detektierten Lichts befindet sich hierzu in einer mit der Objektebene konjugierten Ebene eine Loch- oder Schlitzblende, die im Wesentlichen nur das Licht durchlässt, das aus der Objektebene und damit aus der Ebene, in die das Beleuchtungslicht fokussiert wird, stammt. Licht aus Ebenen oberhalb und unterhalb der Bildebene werden im Wesentlichen blockiert. Auf diese Weise gelangt nur Licht aus einem kleinen Volumen um den jeweiligen Bereich, auf den sich das Beleuchtungslicht konzentriert, zum Detektor, so dass optische Schnittbilder mit hohem Kontrast erzeugt werden können, die nahezu ausschließlich Licht aus einer schmalen Schicht um die jeweilige Fokusebene enthalten.

Ein Weitfeld- und ein Konfokalmikroskopsystem weisen eine Beleuchtungseinheit, die Beleuchtungslicht bereitstellt, und einen Beleuchtungsstrahlengang, der das Beleuchtungslicht in die Objektebene einstrahlt, auf. Ferner ist jeweils ein Detektionsstrahlengang vorhanden. Der Beleuchtungsstrahlengang und der Detektionsstrahlengang können dabei zum Teil miteinander übereinstimmen, wobei insbesondere ein Mikroskopobjektiv Teil des Beleuchtungs- und des Detektionsstrahlengangs sein und sowohl dazu verwendet werden kann, das Beleuchtungslicht in die Objektebene einzustrahlen, als auch das aus der Objektebene abgestrahlte Licht zu sammeln und der Detektion zugänglich zu machen. Mit anderen Worten können der Beleuchtungsstrahlengang und der Detektionsstrahlengang in entsprechenden Mikroskopsystemen teilweise zusammenfallen.

In der Weitfeldmikroskopie ist, wie erwähnt, eine flächige Beleuchtung der Probe in der Objektebene vorgesehen, so dass die Beleuchtungseinheit zusammen mit dem Beleuchtungsstrahlengang dafür eingerichtet ist, einen vorgegebenen Probenbereich auszuleuchten. Es versteht sich, dass der beleuchtete Probenbereich durch die Verwendung von Blenden und dergleichen begrenzt werden kann. Insbesondere kann die Beleuchtungseinheit zusammen mit dem Beleuchtungsstrahlengang dafür eingerichtet sein, eine köhlersche Beleuchtung der Probe bereitzustellen. Der Beleuchtungsstrahlengang bildet dabei ein Bild der Beleuchtungseinheit mittels einer ersten und einer zweiten Linse oder mittels eines ersten und eines zweiten Linsensystems in eine Aperturblendenebene und in eine Ebene, in der die hintere Objektivpupille des Mikroskopobjektivs liegt, ab. Das Beleuchtungslicht durchstrahlt daher die Objektebene vorzugsweise in Form eines im Wesentlichen parallelen Lichtbüschels. Bei der Ebene der Beleuchtungseinheit, der Aperturblendenebene und der Ebene, in der die hintere Objektivpupille des Mikroskopobjektivs liegt, handelt es sich daher um einen ersten Satz konjugierter Ebenen. Ferner findet sich in dem Beleuchtungsstrahlengang ein zweiter Satz konjugierter Ebenen. Hierbei handelt es sich um die Objektebene und die Leuchtfeldblendenebene. Die Leuchtfeldblendenebene wird also in die Objektebene abgebildet.

In der Konfokalmikroskopie wird hingegen eine Punktlichtquelle eingesetzt, die grundsätzlich als eine Einfach- oder Mehrfachpunktlichtquelle ausgebildet sein, d.h. es kann ein einzelner oder es können mehrere Lichtpunkte erzeugt werden, welche dann von der Beleuchtungsoptik in die Objektebene fokussiert werden können. Als eine Einfachpunktlichtquelle kann beispielsweise ein Laserstrahl verwendet werden, welcher auf die Blendenöffnung einer (Einfach-) Lochblende fokussiert wird. Auf diese Weise kann eine besonders intensive Beleuchtung erfolgen. Eine Mehrfachpunktlichtquelle kann insbesondere mittels einer drehbaren Mehrfachlochblende in Form einer Nipkow-Scheibe realisiert werden, wie beispielsweise bei Toomre, D. und Pawley, J.B., Disk-Scanning Confocal Microscopy, Kapitel 10 in Pawley, J.B. (Hrsg.), Handbook of Biological Confocal Microscopy, 3. Auflage, Springer-Verlag 2006, erläutert. In einer derartigen drehbaren Mehrfachlochblende ist eine Vielzahl von Blendenöffnungen bereitgestellt, die in Form mehrerer Spiralarme angeordnet sind. Licht, beispielsweise einer Weißlichtquelle oder eines Lasers, kann nun beispielsweise mittels einer ebenfalls rotierenden Mikrolinsenscheibe von der von der Objektebene abgewandten Seite aus auf die Mehrfachlochblende bzw. deren Blendenöffnungen fokussiert werden. Der Vorteil einer entsprechenden Ausgestaltung ist die schnelle, mehrzeilige Abtastung der Probe.

In beiden Fällen, d.h. bei Verwendung einer Einfach- oder einer drehbaren Mehrfachlochblende ist der Beleuchtungsstrahlengang derart ausgestaltet, dass auch das Licht aus der Objektebene durch eine Einfach- bzw. Mehrfachlochblende tritt. Hierbei kann es sich, insbesondere im Fall einer drehbaren Mehrfachlochblende, um dieselbe Lochblende handeln, die auch für die Beleuchtung verwendet wird. Zu Details sei auf die zitierte Fachliteratur verwiesen. Es kann sich jedoch auch um eine separate Lochblende handeln, insbesondere dann, wenn eine Einfachpunktlichtquelle bzw. eine entsprechende Einfachlochblende verwendet wird.

Bei Verwendung einer rotierenden Mehrfachlochblende mit Blendenöffnungen, die in Form von Spiralarmen angeordnet sind, kann bereits durch die bloße Drehung eine Abtastung der Probe erfolgen, gesonderte Ablenksysteme (Scanner) sind nicht erforderlich. Hingegen erfordern Einfachpunktlichtquellen entsprechende Ablenksysteme bzw. Scaneinrichtungen, wie sie aus dem Stand der Technik bekannt sind. Beispielsweise wird in diesem Zusammenhang auf Stelzer, E.H.K., The Intermediate Optical System of Laser-Scanning Confocal Microscopes, Kapitel 9 in Pawley, J.B. (Hrsg.), Handbook of Biological Confocal Microscopy, 3. Auflage, Springer-Verlag 2006, verwiesen.

Entsprechende Scaneinrichtungen werden insbesondere in der telezentrischen Ebene oder einer hiermit konjugierten Ebene angeordnet, da der Winkel eines Lichtstrahls in dieser Ebene die Lateralposition von dessen Fokuspunkt in der Objektebene definiert. Insbesondere kann hierbei ein schwenkbarer Spiegel eingesetzt werden, dessen Drehpunkt in der Mitte der telezentrischen Ebene liegt. Um eine Ablenkung in der x- und y-Richtung zu ermöglichen (also zweier Richtungen in der Objektebene senkrecht zueinander) kann ein einzelner Spiegel verwendet werden, der in einer Halterung um eine erste Achse verkippbar ist, wobei die Halterung selbst nochmals um eine zweite Achse senkrecht zur ersten Achse verkippbar ist. Auch Anordnungen mit zwei jeweils um unterschiedliche Achsen verkippbaren Spiegeln sind bekannt, die dann jeweils ober- bzw. unterhalb der telezentrischen bzw. damit konjugierten Ebene angeordnet werden.

In dem erfindungsgemäßen Mikroskopsystem sind ein Objektiv und eine bildseitig des Objektivs angeordnete Tubusoptik bereitgestellt, wobei vorteilhafterweise ein Unendlichstrahlengang zwischen dem Objektiv und der Tubusoptik ausgebildet ist und die Tubusoptik Licht aus dem Unendlichstrahlengang in eine Bildebene, die bildseitig der Tubusoptik angeordnet und zu einer Objektebene konjugiert ist, fokussiert. Eine Tubusoptik kann insbesondere als Tubuslinse oder als Satz entsprechender Linsen ausgebildet sein. Mikroskope mit Unendlichstrahlengängen haben den besonderen Vorteil, dass ein entsprechender Unendlichstrahlengang (in Maßen) verlängert werden kann und damit eine Einbringung weiterer optischer Elemente einfach möglich ist. Dies gilt beispielsweise für Teile eines nachfolgend erläuterten Weitfeldbeleuchtungssystems.

Das erfindungsgemäße Mikroskopsystem weist dabei vorteilhafterweise ein entsprechendes Weitfeldbeleuchtungssystem und ein Weitfelddetektionssystem auf, wobei das Weitfeldbeleuchtungssystem und das Weitfelddetektionssystem zur flächigen Beleuchtung und Erfassung eines Bereichs der Objektebene vorgesehen sind. Es versteht sich, dass ein Beleuchtungssystem und ein Detektionssystem generell auch gemeinsame Elemente aufweisen können. So ist, wie erwähnt, beispielsweise das Mikroskopobjektiv aus den oben erläuterten Gründen Teil eines Beleuchtungssystems und Teil eines Detektionssystems. Mit anderen Worten können ein Strahlengang eines Beleuchtungssystems und ein Strahlengang eines Detektionssystems auch in bestimmten Abschnitten kongruent zueinander verlaufen.

Das Weitfeldbeleuchtungssystem umfasst vorteilhafterweise einen in dem Unendlichstrahlengang angeordneten Teilerspiegel, der Licht einer Lichtquelle, die ebenfalls Teil des Weitfeldbeleuchtungssystems ist und beispielsweise als Kaltlicht- oder LED-Lichtquelle ausgebildet sein kann, in den Unendlichstrahlengang zwischen dem Objektiv und der Tubusoptik oder in einen weiteren Unendlichstrahlengang, der insbesondere bildseitig der Tubusoptik ausgebildet sein kann, einkoppelt. Das Weitfeldbeleuchtungssystem weist dabei vorteilhafterweise eine Beleuchtungsoptik auf, die das Licht der Lichtquelle in geeigneter Weise bereitstellt, beispielsweise in Form eines konvergierenden, divergierenden oder kollimierten Lichtstrahls.

Wie erwähnt, ist ein Mikroskopsystem gemäß einer besonders vorteilhaften Ausgestaltung der vorliegenden Erfindung als kombiniertes Weitfeld- und Konfokalmikroskopsystem ausgebildet. Es weist daher vorteilhafterweise neben einem Weitfeldbeleuchtungssystem und einem Weitfelddetektionssystem ein Konfokalbeleuchtungssystem und ein Konfokaldetektionssystem zur punktförmigen Abtastung eines Bereichs der Objektebene auf. Das Weitfeldbeleuchtungssystem und das Weitfelddetektionssystem sind dabei insbesondere zumindest teilweise von dem Konfokalbeleuchtungssystem und ein Konfokaldetektionssystem getrennt. Insbesondere ist dem Weitfelddetektionssystem und dem Konfokaldetektionssystem jeweils eine der verwendeten Detektionseinheiten zugeordnet, wie auch nachfolgend noch erläutert. Das Konfokalbeleuchtungssystem und das Konfokaldetektionssystem können grundsätzlich wie zuvor unter Bezugnahme auf den Stand der Technik erläutert ausgebildet sein.

Insbesondere weist in einem erfindungsgemäßen Mikroskopsystem das Konfokalbeleuchtungssystem eine Punktlichtquelle in einer zu der Objektebene und der Bildebene konjugierten Ebene auf, und das Konfokaldetektionssystem weist insbesondere eine Lochblende in der zu der Objektebene und der Bildebene konjugierten Ebene oder einer weiteren zu der Objektebene und der Bildebene konjugierten Ebene auf.

Unter einer "Punktlichtquelle" wird hier jede Lichtquelle verstanden, die eine Punktbeleuchtung einer Probe ermöglicht. Insbesondere kann es sich bei einer Punktlichtquelle um ein Ende einer Lichtleitfaser handeln, mittels derer dem Konfokalbeleuchtungssystem Licht zugeführt wird. Es kann sich insbesondere auch um eine Blendenöffnung einer Lochblende handeln, die sich in der Fokusebene einer Beleuchtungslicht fokussierenden Optik befindet. Dadurch, dass sich die Punklichtquelle in einer zu der Objektebene und der Bildebene konjugierten Ebene befindet, wird in dem erfindungsgemäßen Mikroskopsystem eine fokussierte Beleuchtung eines Punkts in der Probe bewirkt. Durch die Anordnung der Lochblende in der zu der Objektebene und der Bildebene konjugierten Ebene bzw. einer weiteren konjugierten Ebene in dem Konfokaldetektionssystem kann der erwähnte Vorteil erzielt werden, dass im Wesentlichen nur Licht aus der Fokusebene zu den Detektoren gelangt.

Ist hier jeweils von "punktförmiger" Beleuchtung bzw. Abtastung die Rede, versteht sich, dass unter einem entsprechenden "Punkt" kein ausdehnungsloser Punkt im mathematischen Sinn gemeint ist, sondern ein Punkt entsprechend einer beugungsoptischen Punktverwaschungsfunktion. Dessen Ausdehnung ist im Wesentlichen durch die Wellenlänge des verwendeten Lichts und die numerische Apertur der fokussierenden Optik gegeben.

In dem erfindungsgemäßen Mikroskopsystem kann das Konfokalbeleuchtungssystem insbesondere eine Scaneinrichtung zur Ablenkung von Beleuchtungslicht aufweisen, die in der erläuterten Weise ausgebildet und insbesondere in einer telezentrischen oder damit konjugierten Ebene angeordnet sein kann.

Vorzugsweise umfasst ein erfindungsgemäßes Mikroskopsystemdie mehreren Detektionseinheiten, umfassend die erste Detektionseinheit und die wenigstens eine zweite Detektionseinheit, auf, von welchen eine erste Detektionseinheit dem Weitfelddetektionssystem zugeordnet ist und die wenigstens eine zweite Detektionseinheit dem Konfokaldetektionssystem zugeordnet ist. Die Detektionseinheiten können dabei insbesondere mit unterschiedlichen Detektoren ausgestattet werden, nämlich die erste Detektionseinheit insbesondere mit Flächendetektoren bzw. Kameras und die wenigstens eine zweite Detektionseinheit mit Punktdetektoren.

Vorteilhafterweise ist in einem erfindungsgemäßen Mikroskopsystem eine Umschaltung zwischen Weitfeld- und Konfokalbetrieb möglich. Hierzu kann insbesondere bildseitig der Tubusoptik ein in zwei Positionen anordenbarer Umschaltspiegel bereitgestellt sein, wobei in einer ersten Position des Umschaltspiegels Licht in das Weitfelddetektionssystem (und insbesondere nicht in das Konfokaldetektionssystem) und in einer zweiten Position des Umschaltspiegels Licht in das Konfokaldetektionssystem (und insbesondere nicht in das Weitfelddetektionssystem) eingestrahlt wird. Der Spiegel bewirkt dabei insbesondere in einer der Positionen eine Umlenkung des Strahlengangs in das jeweilige, mit Licht beaufschlagte Detektionssystem.

Gemäß einer besonders bevorzugten Ausführungsform der vorliegenden Erfindung ist die zweite Prismenfläche eines oder mehrerer der Ausgleichselemente jeweils auf zumindest einen Teil der zweiten Prismenfläche des jeweils zugeordneten Strahlteilerprismas aufgekittet. Auf diese Weise kann ohne weitere Befestigungs- und Justagemittel eine parallele Anordnung der entsprechenden Prismenflächen bzw. eine Anordnung in einer Ebene erzielt werden. In diesem Fall kann die dichroitische Schicht, die sich jeweils auf oder an der zweiten Prismenfläche des entsprechenden Strahlteilerprismas befindet, zumindest teilweise in eine derartige Kittschicht eingebracht sein bzw. von dieser Kittschicht überdeckt werden. Auf diese Weise kann die jeweilige dichroitische Schicht entsprechend geschützt werden bzw. es kann sichergestellt werden, dass Grenzflächeneffekte, denen beispielsweise das die dichroitische Schicht durchsetzende Licht ausgesetzt ist, abgemildert bzw. eliminiert werden können.

Grundsätzlich kann die Anordnung aber auch derart sein, dass zwischen der zweiten Prismenfläche eines oder mehrerer der Ausgleichselemente und der zweiten Prismenfläche des jeweils zugeordneten Strahlteilerprismas ein Luftspalt vorgesehen ist, wodurch die Strahlteilungsleistung, wie erwähnt, ggf. positiv beeinflusst werden kann. Allerdings bewirkt diese Anordnung ggf. einen erhöhten Montage- und Justageaufwand.

In jedem Fall befindet sich die dichroitische Schicht eines jeden der Strahlteilerprismen zumindest teilweise zwischen dessen zweiter Prismenfläche und der zweiten Prismenfläche des zugeordneten Ausgleichselements. Eine Anordnung einer Strahlteilerschicht "zwischen" Prismenflächen liegt dabei im hier verwendeten Sprachgebrauch sowohl dann vor, wenn auf eine der Prismenflächen eine entsprechende dichroitische Schicht aufgebracht ist, als auch dann, wenn ein weiteres Element zuvor erläuterten Art mit einer dichroitischen Schicht zwischen die jeweiligen Prismenflächen eingebracht ist, egal ob ein Luftspalt vorhanden ist oder nicht.

In einer entsprechenden Farbstrahlteileranordnung weisen vorteilhafterweise die ersten Winkel identische Winkelbeträge, die zweiten Winkel identische Winkelbeträge und die dritten Winkel identische Winkelbeträge auf. Die Strahlteilerprismen sind in dieser Ausgestaltung daher bezüglich ihrer Winkel identisch ausgebildet. Sie können jedoch bei entsprechend identischen Winkeln unterschiedliche Größen, also unterschiedliche Volumina, aufweisen. Dies kann vorgesehen sein, um in Kombination mit weiteren Maßnahmen wie zusätzlichen Prismen sicherzustellen, dass die durch die dichroitischen Teilungen jeweils gebildeten Lichtanteile identische oder aufeinander abgestimmte Glaswege zurücklegen, wie auch nachfolgend noch erläutert.

Hierbei können die ersten Winkel insbesondere jeweils 30°, die zweiten Winkel insbesondere jeweils 90° und die dritten Winkel insbesondere jeweils 60° betragen. Alternativ dazu können die ersten Winkel auch jeweils 22,5°, die zweiten Winkel jeweils 112,5° und die dritten Winkel jeweils 45° betragen. Insbesondere können, wie erwähnt, die Strahlteilerprismen im Rahmen der vorliegenden Erfindung jeweils als Bauernfeind-Prismen ausgebildet sein.

Bei einer Detektionseinheit eines erfindungsgemäßen Mikroskopsystems umfassen die mehreren Strahlteilerprismen der Farbstrahlteileranordnung insbesondere ein erstes, ein zweites und ein drittes Strahlteilerprisma, wobei die gemeinsame optische Achse senkrecht zu der ersten Prismenfläche des ersten Strahlteilerprismas in die Strahlteileranordnung eintritt und senkrecht zu der ersten Prismenfläche des Ausgleichselements, das dem dritten Strahlteilerprisma zugeordnet ist, aus der Strahlteileranordnung austritt.

Eine besonders vorteilhafte Ausgestaltung ergibt sich bei Verwendung einer Farbstrahlteileranordnung, bei der nur das erste, das zweite und das dritte Strahlteilerprisma bereitgestellt sind, wobei die gemeinsame optische Achse nacheinander durch die erste und die zweite Prismenfläche des ersten Strahlteilerprismas, durch die erste und die zweite Prismenfläche des zweiten Strahlteilerprismas und durch die erste und die zweite Prismenfläche des dritten Strahlteilerprismas verläuft. Auch die jeweils zugehörigen Ausgleichselemente bzw. ihre Prismenflächen werden auf diese Weise nacheinander von der optischen Achse durchsetzt. Auf diese Weise kann eine Aufteilung von Licht in insgesamt vier Wellenlängenbereiche erzielt werden, die mittels einer minimalen Anzahl an optischen Elementen realisierbar ist, und bei der die Glaswege und die Anzahl an Grenzflächen im Vergleich zu den eingangs erläuterten herkömmlichen Farbstrahlteileranordnungen minimiert sind. Die einzelnen Strahlteilerprismen können insbesondere in einer derartigen Anordnung in der zuvor erläuterten Weise versetzt bzw. verdreht zueinander angeordnet sein.

Licht, das in einer derartigen Anordnung in Form eines Lichtbündels entlang der gemeinsamen optischen Achse über die erste Prismenfläche in das erste Strahlteilerprisma und damit die Farbstrahlteileranordnung insgesamt eingestrahlt wird, erfährt dabei folgende Beeinflussung durch die Farbstrahlteileranordnung bzw. deren Strahlteilerprismen:

Ein erster Wellenlängenbereich bzw. spektraler Anteil des in das erste Strahlteilerprismas eingestrahlten Lichts, für den die auf die zweite Prismenfläche des ersten Strahlteilerprismas aufgebrachte dichroitische Schicht bzw. Beschichtung selektiv ist bzw. reflektierend wirkt, wird an der zweiten Prismenfläche des ersten Strahlteilerprismas bzw. der auf diese aufgebrachten dichroitischen Schicht zurück zur ersten Prismenfläche des ersten Strahlteilerprismas reflektiert, an dieser erneut reflektiert und, die dritte Prismenfläche des ersten Strahlteilerprismas durchsetzend, aus diesem ausgestrahlt. Ein zweiter Wellenlängenbereich bzw. spektraler Anteil des in das erste Strahlteilerprismas eingestrahlten Lichts, für den die auf die zweite Prismenfläche des ersten Strahlteilerprismas aufgebrachte dichroitische Schicht bzw. Beschichtung nicht selektiv bzw. transparent ist, durchdringt diese und wird, nachdem er nachfolgend die zweite und die erste Prismenfläche des zugeordneten Ausgleichselements durchstrahlt hat, über die erste Prismenfläche des zweiten Strahlteilerprismas in das zweite Strahlteilerprisma eingestrahlt.

Ein wiederum erster Wellenlängenbereich bzw. spektraler Anteil des auf diese Weise in das zweite Strahlteilerprismas eingestrahlten Lichts, für den die auf die zweite Prismenfläche des zweiten Strahlteilerprismas aufgebrachte dichroitische Schicht bzw. Beschichtung selektiv ist bzw. reflektierend wirkt, wird an der zweiten Prismenfläche des zweiten Strahlteilerprismas bzw. der auf diese aufgebrachten dichroitischen Schicht zurück zur ersten Prismenfläche des zweiten Strahlteilerprismas reflektiert, an dieser erneut reflektiert und, die dritte Prismenfläche des zweiten Strahlteilerprismas durchsetzend, aus diesem ausgestrahlt Ein zweiter Wellenlängenbereich bzw. spektraler Anteil des in das zweite Strahlteilerprismas eingestrahlten Lichts, für den die auf die zweite Prismenfläche des zweiten Strahlteilerprismas aufgebrachte dichroitische Schicht bzw. Beschichtung nicht selektiv bzw. transparent ist, durchsetzt diese und wird, nachdem er nachfolgend die zweite und die erste Prismenfläche des zugeordneten Ausgleichselements durchstrahlt hat, über die erste Prismenfläche des dritten Strahlteilerprismas in das dritte Strahlteilerprisma eingestrahlt.

Ein wiederum erster Wellenlängenbereich bzw. spektraler Anteil des auf diese Weise in das dritte Strahlteilerprismas eingestrahlten Lichts, für den die auf die zweite Prismenfläche des dritten Strahlteilerprismas aufgebrachte dichroitische Schicht bzw. Beschichtung selektiv ist bzw. reflektierend wirkt, wird an der zweiten Prismenfläche des dritten Strahlteilerprismas bzw. der auf diese aufgebrachten dichroitischen Schicht zurück zur ersten Prismenfläche des dritten Strahlteilerprismas reflektiert, an dieser erneut reflektiert und, die dritte Prismenfläche des dritten Strahlteilerprismas durchsetzend, aus diesem ausgestrahlt. Ein zweiter Wellenlängenbereich bzw. spektraler Anteil des in das dritte Strahlteilerprismas eingestrahlten Lichts, für den die auf die zweite Prismenfläche des dritten Strahlteilerprismas aufgebrachte dichroitische Schicht bzw. Beschichtung nicht selektiv bzw. transparent ist, durchsetzt diese und wird, nachdem er nachfolgend ein die zweite und die erste Prismenfläche des zugeordneten Ausgleichselements durchstrahlt hat, ausgestrahlt, gelangt jedoch nun zur Detektion.

Der erste Anteil des in das erste Strahlteilerprisma eingestrahlten Lichts, der aus diesem über die dritte Prismenfläche ausgestrahlt wird, wird vorteilhafterweise einer ersten Kamera bzw. einem ersten Detektor zugeführt bzw.,

insbesondere über eine entsprechende Schnittstelle, aus der Detektionseinheit ausgestrahlt. Er kann zuvor auch in geeigneter Weise, beispielsweise mittels eines Bandpassfilters, gefiltert werden. Der erste Anteil des in das zweite Strahlteilerprisma eingestrahlten Lichts, der aus diesem über die dritte Prismenfläche ausgestrahlt wird, wird vorteilhafterweise einer zweiten Kamera bzw. einem zweiten Detektor zugeführt bzw., insbesondere über eine entsprechende Schnittstelle, aus der Detektionseinheit ausgestrahlt. Auch dieser kann zuvor in geeigneter Weise, beispielsweise mittels eines Bandpassfilters, gefiltert werden. Der erste Anteil des in das dritte Strahlteilerprisma eingestrahlten Lichts, der aus diesem über die dritte Prismenfläche ausgestrahlt wird, wird vorteilhafterweise einer dritten Kamera bzw. einem dritten Detektor zugeführt bzw., insbesondere über eine entsprechende Schnittstelle, aus der Detektionseinheit ausgestrahlt. Auch dieser kann zuvor in geeigneter Weise, beispielsweise mittels eines Bandpassfilters, gefiltert werden. Der zweite Anteil des in das dritte Strahlteilerprisma eingestrahlten Lichts, der aus diesem über die zweite Prismenfläche ausgestrahlt wird und der danach die zweite und die erste Prismenfläche des zugehörigen Ausgleichselements durchstrahlt, wird vorteilhafterweise einer vierten Kamera bzw. einem vierten Detektor zugeführt bzw., insbesondere über eine entsprechende Schnittstelle, aus der Detektionseinheit ausgestrahlt. Auch dieser kann zuvor in geeigneter Weise, beispielsweise mittels eines Bandpassfilters, gefiltert werden.

Die mittels des ersten, zweiten, dritten und vierten Detektors, falls vorhanden, erfassten Daten, beispielsweise mittels die mittels entsprechender Kameras aufgenommenen Bilder, insbesondere monochromatische Bilder können mittels einer geeigneten Abbildungseinrichtung, insbesondere mittels digitaler Mittel, prozessiert werden, wie auch unter Bezugnahme auf das erfindungsgemäße Verfahren und seine Ausgestaltungen noch näher erläutert. Insbesondere können entsprechende Bilder zur Registrierung gebracht werden, wobei insbesondere abbildungsinhärente, d.h. von den beobachteten Strukturen stammende, oder artifizielle Markierungen verwendet werden können. Erfolgt in einem Konfokaldetektionssystem eine Auswertung mittels Punktdetektoren, können entsprechend erfasste Daten mit den bekannten Ansteuerdaten einer Scaneinrichtung zu einem Bild zusammengesetzt werden.

Ungeachtet der konkreten Anzahl an Strahlteilerprismen und Ausgleichselemente teilt die Farbstrahlteileranordnung einer erfindungsgemäß einsetzbaren Detektionseinheit vorteilhafterweise multichromatisches Licht, das entlang der gemeinsamen optischen Achse durch die erste Prismenfläche des ersten Strahlteilerprismas in die Farbstrahlteileranordnung eingestrahlt wird, in mehrere spektrale Anteile auf, die jeweils detektiert werden können.

Vorteilhafterweise wird dabei einer der mehreren spektralen Anteile über erste Prismenfläche des Ausgleichselements, das dem dritten Strahlteilerprisma zugeordnet ist, aus der Strahlteileranordnung ausgestrahlt. Die anderen spektralen Anteile werden, sofern vorhanden, jeweils über die des ersten, zweiten und dritten Strahlteilerprismas aus der Strahlteileranordnung ausgestrahlt. Eine maximale Ausnutzung einer Detektionseinheit ergibt sich in einer Ausführungsform, in der die Anzahl der spektralen Anteile um eins größer ist als die Anzahl der Strahlteilerprismen, wobei einer der spektralen Anteile über erste Prismenfläche des Ausgleichselements, das einem letzten Strahlteilerprisma zugeordnet ist, aus der Strahlteileranordnung ausgestrahlt wird und jeweils einer der übrigen spektralen Anteile über die dritte Prismenfläche jeweils eines der mehreren Strahlteilerprismen aus der Strahlteileranordnung ausgestrahlt wird. Auf diese Weise kann eine maximale Aufteilung in spektrale Anteile mit einer minimalen Anzahl an Bauteilen erzielt werden.

In einer erfindungsgemäß einsetzbaren Detektionseinheit kann der ersten Prismenfläche des Ausgleichselements, das dem letzten Strahlteilerprisma zugeordnet ist, und/oder zumindest einer der dritten Prismenflächen der mehreren Strahlteilerprismen jeweils eine Schnittstelle bzw. ein Ausgang zur Anbringung eines Detektors und/oder ein entsprechender Detektor selbst zugeordnet sein. In dieser Ausgestaltung können insbesondere frei wählbare Detektoren modular an die oder einen Teil der Schnittstellen angebracht werden. Insbesondere können die Schnittstellen dabei als mechanische Standardschnittstellen, beispielsweise in Form sogenannter C-Mounts, Bajonettadapter und dergleichen vorgesehen sein, die einen insbesondere werkzeugfreien Wechsel der Detektoren bzw. Kameras ermöglichen. Entsprechende mechanische Schnittstellen können insbesondere auch justierbar ausgeführt sein, um beispielsweise eine Bildlage entlang oder senkrecht zur optischen Achse einzustellen.

Eine erfindungsgemäß einsetzbare Detektionseinheit kann gemäß einer weiteren Ausgestaltung auch bereits mehrere Detektoren umfassen, wobei jeder der mehreren Detektoren eine Detektionsebene aufweist. Die Anzahl der Detektoren ist grundsätzlich beliebig. In einer besonders bevorzugten Ausgestaltung der vorliegenden Erfindung ist jedoch die Anzahl der Detektoren maximal um eins größer als die Anzahl der Strahlteilerprismen. In dieser Ausgestaltung kann die erwähnte maximale Strahlteilung mittels einer minimalen Anzahl an optischen Bauteilen erzielt werden. In diesem Fall wird jeweils einer der in der Farbstrahlteileranordnung gebildeten spektralen Anteile jeweils einem Detektor zugeführt und in diesem detektiert. Dabei ist die Detektionsebene eines der Detektoren in einer gemeinsamen Ebene mit oder parallel zu der zweiten Prismenfläche des Ausgleichselements angeordnet, das dem letzten Strahlteilerprisma zugeordnet ist und die übrigen Detektoren sind derart angeordnet, dass ihre jeweiligen Detektionsebenen in einer gemeinsamen Ebene mit oder parallel zu der dritten Prismenfläche jeweils eines der Strahlteilerprismen liegen.

Die Farbstrahlteileranordnung zum Einsatz in der vorliegenden Erfindung ist, wie mehrfach erwähnt, derart ausgestaltet, dass den Strahlteilerprismen jeweils entsprechende Ausgleichselemente mit einer ersten und einer zweiten Prismenfläche zugeordnet sind. Durch eine entsprechende Anordnung kann insbesondere bewirkt werden, dass die optische Wege bzw. Glaswege zwischen einer Eingangsseite der Farbstrahlteileranordnung, beispielsweise einem entsprechenden Adapter an ein Mikroskop, und den entsprechenden Kameras bzw. Detektoren in allen durch die erläuterten spektral selektiven Auskopplungen von Wellenlängenanteilen gebildeten Teilstrahlengängen identisch oder derart optimiert bzw. aufeinander abgestimmt sind, dass Reste von Farblängsfehlern, beispielsweise eines Kameraadapters oder einer anderen optischen Anordnung, insbesondere zwischen der Farbstrahlteileranordnung und einem Mikroskop, kompensiert werden.

Gemäß einer besonders bevorzugten Ausführungsform der vorliegenden Erfindung ist also vorgesehen, dass die Ausgleichselemente derart ausgebildet sind, dass jeweils optische Wege der die spektralen Anteile des multichromatischen Lichts, insbesondere ab der ersten Prismenfläche des ersten Strahlteilerprismas bis zu den jeweiligen Detektionsflächen der Detektoren, in der Farbstrahlteileranordnung Glaswege zurücklegen, deren Längen sich um nicht mehr als einen vorbestimmten Betrag unterscheiden. Der vorbestimmte Betrag |d|, in dem sich die jeweiligen Glaswege maximal unterscheiden dürfen oder vorteilhafterweise maximal unterscheiden sollten, kann dabei insbesondere gemäß

$$|d| \leq \frac{n_1 n_2}{n_1 - n_2} \frac{\lambda}{NA^2}$$

bestimmt werden, wobei $n_1$ eine Brechzahl des jeweils für die Komponenten der Strahlteileranordnung verwendeten Materials bei der unteren Wellenlängengrenze des betrachteten Lichts, $n_2$ die entsprechende Brechzahl bei der oberen Wellenlängengrenze, $\lambda$ eine mittlere verwendete Wellenlänge und $NA$ die numerische Apertur der Abbildung auf dem Detektor oder auf einer entsprechenden Detektorebene angibt. Wird beispielsweise ein Licht in einem Wellenlängenbereich von 400 bis 500 nm betrachtet, bezeichnet $n_1$ die Brechzahl bei 400 und $n_2$ die Brechzahl bei 500 nm. Die mittlere verwendete Wellenlänge kann insbesondere mit 465 nm liegen. Die numerische Apertur NA ist der Sinus des halben Öffnungswinkels des auf den Detektor bzw. die Detektionsebene auftreffenden Strahlbüschels.

Durch die Verwendung eines entsprechenden, maximal zulässigen Differenzbetrags |d| kann erreicht werden, dass der Farblängsfehler der Abbildung geringer als die Schärfentiefe ist und daher nicht negativ in Erscheinung tritt.

Insbesondere kann im Rahmen der vorliegenden Erfindung anstelle des Betrags d ein Betrag gewählt werden, der höchstens 25%, 50%oder 75% des gemäß der obigen Gleichung ermittelten Betrags |d| entspricht. Auf diese Weise können zusätzlich zu den ggf. unterschiedlichen Glaswegen im Rahmen der vorliegenden Erfindung weitere Einflüsse auf den Farblängsfehler berücksichtigt werden.

Mit besonderem Vorteil sind jeweils die Ausgleichselemente bzw. deren Ausgleichsprismen aus demselben Material, bzw. einem Material derselben oder einer vergleichbaren optischen Dichte wie die jeweiligen Strahlteilerprismen, denen sie zugeordnet sind, ausgebildet. Auch sämtliche Prismen, d.h. sämtliche Strahlteilerprismen und sämtliche Ausgleichselemente bzw. Ausgleichsprismen können aus demselben Material bzw. einem Material derselben oder einer vergleichbaren optischen Dichte ausgebildet sein.

In einer Detektionseinheit des erfindungsgemäß vorgeschlagenen Mikroskopsystems verläuft ein Lichtstrahl, der über die zweite Prismenfläche eines der Strahlteilerprismen aus- und über die zweite Prismenfläche des diesem zugeordneten Ausgleichselements in das Ausgleichselement eintritt, in dem entsprechenden Strahlteilerprisma und seinem zugeordneten Ausgleichselement insbesondere ohne Parallelversatz und in derselben Richtung. Entsprechend verläuft ein Lichtstrahl, der über die erste Prismenfläche eines der Ausgleichselemente, das einem Strahlteilerprisma zugeordnet ist, aus dem Ausgleichsprisma austritt und in ein nachgeordnetes Strahlteilerprisma eingestrahlt wird, in dem nachgeordneten Strahlteilerprisma ohne Parallelversatz und in derselben Richtung wie zuvor in dem entsprechenden Ausgleichselement. Durch die Verwendung der Ausgleichselemente wird insbesondere bewirkt, dass die Ein- und Austrittsflächen am Übergang vom bzw. zum optisch weniger dichten Medium senkrecht zur optischen Achse stehen.

Mit besonderem Vorteil ist, wie bereits eingangs erläutert, die Farbstrahlteileranordnung Teil eines Mehrkameramoduls. Hierzu weist Die Detektionseinheit vorteilhafterweise ein Gehäuse auf, das einen Eingang aufweist, der zur Kopplung mit einem geeigneten Fotoabgang bzw. Detektionsabgang eines Mikroskops eingerichtet ist. Ein entsprechender "Eingang" ist dabei dazu eingerichtet, Licht von dem Mikroskop, insbesondere Licht, das aus mehreren spektralen Wellenlängenanteilen zusammengesetzt ist, in die Farbstrahlteileranordnung einzustrahlen. Bei diesem Licht kann es sich beispielsweise um solches handeln, das über einen Mehrband-Fluoreszenzteilerwürfel aus dem Mikroskop ausgestrahlt wird. Ein entsprechender Eingang kann insbesondere als optisch-mechanische Schnittstelle ausgebildet sein, deren Anschlussebene ebenfalls senkrecht zu der mehrfach erwähnten gemeinsamen optischen Achse liegt, die die ersten und zweiten Prismenflächen der Strahlteilerprismen durchsetzt. Ein entsprechender Eingang ist insbesondere zur direkten oder indirekten Kopplung mit einem entsprechenden Fotoabgang eines Mikroskops ausgebildet, wobei hier unter einer "direkten" Kopplung eine Kopplung ohne zwischengeschaltete weitere mechanische und/oder optische Elemente und einer "indirekten" Kopplung eine Kopplung mittels eines mechanischen und/oder optischen Adapters mit beliebigen weiteren Elementen wie eingangs erläutert verstanden wird.

Ein "Fotoabgang" ist im hier verwendeten Sprachgebrauch eine optisch-mechanische Schnittstelle eines Mikroskops, über die Beobachtungslicht, also Licht, das von einer beobachteten Probe ab- oder zurückgestrahlt wird, aus dem Mikroskop ausgestrahlt werden kann. Hierbei kann es sich um das gesamte Beobachtungslicht handeln, ein entsprechender Fotoabgang kann jedoch auch nur einen Teil des Beobachtungslichts erhalten, beispielsweise wenn in diesen über einen, in diesem Fall nicht spektral selektiven Strahlteiler, Lichtanteile aus dem Beobachtungsstrahlengang des Mikroskops ausgekoppelt werden. Entsprechendes gilt für einen "Detektionsabgang", insbesondere im Fall eines Konfokalmikroskopsystems.

Ein Fotoabgang kann als Unendlichschnittstelle ausgebildet sein, das Beobachtungslicht bzw. ein entsprechendes Bild der Probe kann also ins Unendliche abgebildet werden. Ein Fotoabgang kann auch beispielsweise zur Bereitstellung von Beobachtungslicht in kollimierter Form, also mit klassischer Endlichoptik, eingerichtet sein.

Der Fotoabgang, die Detektionseinheit und/oder ein zwischengeschalteter Adapter können auch eine fokussierende Optik aufweisen, die derart ausgestaltet ist, dass das Beobachtungslicht auf eine Detektorfläche der jeweils verwendeten Kameras bzw. Detektoren fokussiert wird. Vorteilhafterweise wird, ungeachtet der spezifischen Ausbildung, in allen Fällen das Beobachtungslicht in der Detektionseinheit in Form eines konvergierenden Strahlenbündels in die jeweiligen Strahlteilerprismen eingestrahlt, wobei eine Brennebene jeweils in der Ebene der verwendeten Kameras bzw. Detektoren liegt. Dabei wird durch die vorstehend erläuterten Maßnahmen sichergestellt, dass die jeweiligen Teilstrahlengänge, die durch die dichroitischen Teilungen generiert werden, identische oder, beispielsweise zum Ausgleich von Farblängsfehlern, aufeinander abgestimmte Längen, insbesondere identische oder aufeinander abgestimmte Glaswege, aufweisen.

Ein Verfahren zur mikroskopischen Abbildung unter Verwendung eines Mikroskopsystems mit einer zuvor in einer Vielzahl unterschiedlicher Ausgestaltungen erläuterten ersten Detektionseinheit oder mehreren solcher Detektionseinheiten, umfassend eine erste Detektionseinheit und wenigstens eine zweite Detektionseinheit, ist ebenfalls Gegenstand der vorliegenden Erfindung. Mittels des Mikroskops wird dabei Licht mit mehreren Wellenlängenanteilen in die Detektionseinheit oder zumindest eine der Detektionseinheiten mit der jeweiligen Strahlteileranordnung eingestrahlt und in unterschiedliche spektrale Anteile zerlegt. Die unterschiedlichen spektralen Anteile werden jeweils durch Detektoren erfasst. Zu den jeweiligen Merkmalen und Vorteilen, die sich in entsprechender Weise auch auf das erfindungsgemäße Verfahren auswirken, sei auf die obigen Erläuterungen hinsichtlich der Farbstrahlteileranordnung ausdrücklich verwiesen.

Insbesondere kann hierbei ein Mikroskopsystem verwendet werden, das ein Weitfeldbeleuchtungssystem und ein Weitfelddetektionssystem zur flächigen Beleuchtung und Erfassung eines Bereichs der Objektebene sowie ein Konfokalbeleuchtungssystem und ein Konfokaldetektionssystem zur punktförmigen Abtastung eines Bereichs der Objektebene aufweist, wobei das Verfahren einen Weitfeldbetriebsmodus und einen Konfokalbetriebsmodus umfasst, zwischen denen gemäß einer Benutzervorgabe umgeschaltet wird. Hierbei kann beispielsweise der zuvor erläuterte Umschaltspiegel zum Einsatz kommen, so dass nur jeweils eines der Systeme Licht erhält.

In dem erfindungsgemäßen Verfahren werden die durch die Detektoren erfassten unterschiedlichen spektralen Anteile zumindest teilweise mittels einer Recheneinheit prozessiert, wobei ein Prozessieren insbesondere eine Auswertung der einzelnen spektralen Anteile, die insbesondere in Form digitaler Bilddaten erfasst werden, umfasst. Unterschiedliche spektrale Anteile können auch zumindest teilweise miteinander fusioniert, beispielsweise zu Gesamtbilddaten zusammengesetzt werden, wobei eine Auswertung auch oder nur der Gesamtbilddaten erfolgen kann. Eine entsprechende Auswertung kann insbesondere als Datenauswertung, insbesondere als Bildauswertung, vorgenommen werden und eine Bewertung einer Bildhelligkeit oder Intensität, eines Kontrasts und/oder, insbesondere falls Mehrfarbdetektoren verwendet werden, unterschiedlicher Farbanteile umfassen. Eine Prozessierung kann beispielsweise auch andere, aus dem Bereich der Bildverarbeitung bekannte Verfahrensschritte wie einen Weiß- bzw. Farbabgleich, eine Nullwertsubtraktion, eine digitalen Filterung, eine Normalisierung, einen Kontrastausgleich, eine Kontrasterhöhung, eine Schärfung oder eine Segmentierung umfassen.

Auf Grundlage einer entsprechenden Datenauswertung können insbesondere Detektions- und Beleuchtungsparameter des Mikroskops und/oder Detektionsparameter zumindest eines der Detektoren eingestellt werden, um auf diese Weise gezielt weitere Probeninformationen zu erhalten.

Insbesondere können als Beleuchtungsparameter eine Intensität, eine Wellenlänge und/oder eine Polarisation von Licht wenigstens einer Lichtquelle in einer Beleuchtungseinheit des Mikroskops eingestellt werden. Auch auf diese Weise kann, beispielsweise durch eine selektive Anregung nur eines Fluorophors, eine spektrale Entmischung, wie sie nachfolgend erläutert wird, erleichtert werden. Ferner kann, beispielsweise durch eine geeignete Einstellung der Lichtintensität einer Wellenlänge, eine Überstrahlung eines Bilds durch die Fluoreszenzantwort des entsprechend angeregten Fluorophors verhindert werden.

Detektionsparameter können beispielsweise unterschiedliche elektronische Verstärkungen (Gains) des oder der verwendeten Detektoren umfassen. Neben einer Variation der Anregung mittels des eingestrahlten Lichts oder einer Verschiebung der Anregungswellenlänge kann auch eine Anpassung des Detektionskanals durch eine Einstellung der elektronischen Verstärkung eine spektrale Entmischung erleichtern. Auch eine Belichtungszeit kann entsprechend eingestellt werden.

Das Prozessieren der unterschiedlichen spektralen Anteile kann insbesondere auch, wie bereits angesprochen, eine Registrierung und Überlagerung zumindest eines Teils der unterschiedlichen spektralen Anteile umfassen. Hierbei können, wie bereits angesprochen, insbesondere abbildungsinhärente, d.h. von den beobachteten Strukturen stammende, oder artifizielle Markierungen verwendet werden können. Auf diese Weise kann die Registrierung besonders zuverlässig vorgenommen werden.

Gemäß einer besonders vorteilhaften Ausgestaltung der vorliegenden Erfindung kann auch vorgesehen sein, für zumindest einen Teil der unterschiedlichen spektralen Anteile Lageabweichungsdaten bereitzustellen und für die Registrierung zu verwenden. Beispielsweise kann eine im Rahmen der vorliegenden Erfindung eingesetzte Detektionseinheit nach der Fertigung oder nach einer Justage eingemessen werden, wobei für jeden spektralen Kanal eine Abweichung einer Bildlage gegenüber einer Normlage bzw. Solllage oder einer mittleren Bildlage aller spektralen Kanäle erfasst werden kann. Eine derartige Erfassung ist insbesondere unter Verwendung von abbildungsinhärenten Strukturen wie soeben erläutert möglich, welche insbesondere unter Verwendung von Eich- oder Normstücken erfasst werden können.

Entsprechende Abweichungen können im Rahmen der vorliegenden Erfindung insbesondere in Form von Kalibrationsdaten vorgehalten und bei einer späteren Untersuchung und Prozessierung verwendet werden. Die Kalibrationsdaten können auch beispielsweise in einem oder mehreren, insbesondere nichtflüchtigen, Datenspeichern gespeichert werden, der oder die der Detektionseinheit oder spezifischen Detektoren zugeordnet ist oder sind, beispielsweise in einem gemeinsamen Gehäuse.

Gemäß einer besonders vorteilhaften Ausführungsform der vorliegenden Erfindung kann das Prozessieren der unterschiedlichen spektralen Anteile eine spektrale Entmischung umfassen, insbesondere nachdem die spektralen Anteile in Form von Einzelbilddaten erfasst, zur Registrierung gebracht und zu Gesamtbilddaten zusammengesetzt wurden. Im Rahmen der vorliegenden Erfindung kann die spektrale Entmischung insbesondere durch die zuvor erläuterten Maßnahmen zur Abschwächung oder Verstärkung eines Detektionskanals umfassen.

Die spektrale Entmischung kann insbesondere eine lineare spektrale Entmischung umfassen. Dies gilt insbesondere dann, wenn eine entsprechende Probe mit einem oder mehreren Fluoreszenzfarbstoffen markiert ist. Eine spektrale Entmischung kann beispielsweise unter Verwendung von Referenzspektren vorgenommen werden, anhand derer der Beitrag der jeweiligen Fluorophore bestimmt bzw. abgeschätzt werden kann. Durch die spektrale Entmischung, die grundsätzlich aus dem Stand der Technik bekannt ist, ist es insbesondere möglich, eine exakte Trennung einer Reihe unterschiedlicher Fluoreszenzfarbstoffe mit sehr ähnlichen Emissionsspektren vorzunehmen. Zu weiteren Details sei auf einschlägige Fachliteratur verwiesen.

Eine spektrale Entmischung kann dadurch erleichtert werden, dass durch die Ansteuerung der Beleuchtungseinheit oder auch ggf. von unterschiedlichen Detektoren, wie zuvor erläutert, der Beitrag eines oder mehrerer Fluorophore zu einem Gesamtspektrum erhöht oder verringert werden kann. Auf diese Weise ist es beispielsweise möglich, Referenzspektren zu erhalten, die aus einer Anregung von Licht mit einer spezifisch ausgewählten Eigenschaft resultieren und diese mit einem Gesamtspektrum zu vergleichen. Mit anderen Worten können die Beiträge anderer Fluorophore zu einem Spektrum gezielt beeinflusst werden, um den Beitrag eines zu untersuchenden Fluorophors besser beurteilen zu können.

Wird eine spektrale Entmischung vorgenommen, umfasst die Auswertung der Einzelbilddaten vorteilhafterweise eine Phasoranalyse, und die Ansteuerung erfolgt auf Grundlage der Phasoranalyse. Das erfindungsgemäß vorgeschlagene Mikroskopsystem erweist sich insbesondere im Zusammenhang mit einer derartigen Phasoranalyse als besonders vorteilhaft, weil hier das Signal/Rausch-Verhältnis entscheidend für die Trennung bzw. spektrale Entmischung sein kann. Daher ist es hierbei besonders vorteilhaft, wenn die Möglichkeit besteht, einzelne Farben bzw. spektrale Kanäle hinsichtlich ihrer Intensität zu erhöhen bzw. in Bezug auf das vorliegende Rauschen anzupassen. Dies ist im Rahmen der vorliegenden Erfindung möglich.

In einer Phasoranalyse werden die Komponenten der einzelnen Pixel als Punkte in einem Phasorplot dargestellt. Einzelne spektrale Komponenten stellen in einer derartigen Auswertung Punktewolken dar. Der Durchmesser dieser Punktewolken hängt vom Rauschen ab und wird dabei idealerweise soweit minimiert dass eine hinreichend genaue Identifikation der Beiträge der einzelnen Farbstoffe zum Farbwert eines Pixels möglich ist. Durch die Verwendung der erfindungsgemäß vorgeschlagenen Detektionseinheit wird einem Benutzer eine Entscheidungsmöglichkeit zwischen der Präzision der spektralen Entmischung und der Probenbelastung durch eine stärkere Beleuchtung angeboten.

In einer besonders bevorzugten Ausgestaltung des erfindungsgemäß vorgeschlagenen Verfahrens werden die unterschiedlichen spektralen Anteile in Form von Pixeldaten erfasst und/oder das Prozessieren umfasst das Erzeugen von Pixeldaten. In einem derartigen Fall kann ein Inhalt eines oder mehrerer Pixel in den Pixeldaten, dessen oder deren Spektrum nur durch den Beitrag genau eines Fluorophors hervorgerufen wird, in den Pixeldaten ermittelt werden. Dieser oder diese Inhalte können dann als Referenzwert für die spektrale Entmischung verwendet werden. Bei einem oder mehreren solchen Referenzwerten kann es sich also insbesondere um Inhalte eines oder mehrerer Pixel handeln, dessen oder deren Spektrum nur durch den Beitrag eines Fluorophors hervorgerufen wird.

Weitere Aspekte und Vorteile der vorliegenden Erfindung und weitere Ausgestaltungen, die in Kombination mit sämtlichen der zuvor erläuterten Ausführungsformen vorgesehen und vorteilhaft sein können, werden nachfolgend nochmals zusammenfassend erläutert.

Die Kameras bzw. Detektoren, die in einer Detektionseinheit im Rahmen der vorliegenden Erfindung eingesetzt bzw. an eine entsprechende Farbstrahlteileranordnung angekoppelt oder in dieser verbaut werden können, besitzen vorteilhafterweise dieselbe Pixelgröße und Pixelanordnung, so dass auf elektronischem Wege eine Überlagerung der Bilder aller Kameras ohne möglicherweise fehleranfällige Skalierung möglich ist. Dies betrifft selbstverständlich nur Flächendetektoren. Mittels der erfindungsgemäß vorgeschlagenen Farbstrahlteileranordnung kann insbesondere ein fest vorgegebene, nicht wechselbare, spektrale Aufteilung zwischen den Kameras bzw. entsprechenden Detektoren erzielt werden. Auf diese Weise ist eine hohe Reproduzierbarkeit und Einfachheit in der Bedienung möglich. Aufgrund der jeweils identischen und geradzahligen Anzahl an Reflexionen können auf allen Kameras bzw. Detektoren lagegleiche Bilder erhalten werden.

Die Verwendung von Bauernfeind-Prismen ist besonders vorteilhaft, da bei einem kleinen Auftreffwinkel, insbesondere 30°, die optischen Eigenschaften der dichroitischen Schicht auf der zweiten Prismenfläche besser sind als insbesondere bei den aus dem Stand der Technik bekannten Vorrichtungen. Die zweifache Reflexion an den Strahlteilerprismen stellt sicher, dass die Bilder auf allen Kameras bzw. Detektoren gleich orientiert sind und daher keine Rücksicht auf die Fähigkeit der Kameras bzw. Detektoren zur hardwareseitigen Bildspiegelung genommen werden muss. Da die zweite Reflexion aufgrund eines entsprechend geringen Auftreffwinkels des Lichts auf die erste Prismenfläche vorteilhafterweise eine Totalreflexion ist, hat diese keine negativen Auswirkungen auf die Transmission oder Abbildungseigenschaften.

Die Wahl der Glaswege in den Prismen, also den Strahlteilerprismen und den vorteilhafterweise vorgesehen Ausgleichselementen, erfolgt im Rahmen der vorliegenden Erfindung grundsätzlich mit zwei Zielrichtungen. Da alle Glaswege gleich lang bzw. mittels der Ausgeleichselemente aufeinander abgestimmt werden können, müssen die Optik des optional vorgesehenen Kameradaapters bzw. die Parameter des in die Farbstrahlteileranordnung eingestrahlten Lichtbündels nur auf diesen Glasweg optimiert werden und die Abbildungsqualität an allen Kameras bzw. Detektoren hängt nur von der Qualität des Kameraadapters ab. Die Länge der Glaswege zu den verschiedenen Kameras bzw. Detektoren oder eine Anpassung entsprechender Glaswege durch die Größe und ggf. Geometrie der Strahlteilerprismen sowie die Größe und ggf. Geometrie der diesen zugeordneten Ausgleichselemente kann im Rahmen der vorliegenden Erfindung insbesondere benutzt werden, um kleine Reste des Farblängsfehlers in den verschiedenen Kanälen zu kompensieren.

Im Rahmen der vorliegenden Erfindung können Kameras bzw. Detektoren eingesetzt werden, die für ihren jeweiligen Spektralbereich optimierte Empfindlichkeiten aufweisen. Auf diese Weise wird die Sensitivität der Detektion insgesamt verbessert. Die Bilder der Kameras bzw. Detektoren können mittels einer Recheneinheit, beispielsweise eines Field Programmable Gate Array (FPGA), eines Hauptprozessors (CPU) oder eines Grafikprozessors (GPU) insbesondere pixelgenau überlagert werden. Dabei kann beispielsweise eine mechanische Ungenauigkeit in der lateralen Bildlage oder der Aufrichtung der Kameras ausgeglichen werden. Ein Datenträger mit spezifischen Kalibrierinformationen des jeweiligen Systems, mit dem beispielsweise mechanische Ungenauigkeiten oder optische Restfehler (Verzeichnung, Farbquerfehler etc.) digital kompensiert werden können, kann beispielsweise in einem nichtflüchtigen elektronischen Speicherbaustein (EEPROM) in einem entsprechenden Kameramodul bzw. der Farbstrahlteileranordnung integriert sein.

Die Zuordnung des von einem Farbstoff ausgesandten Emissionslichts basierend auf den Bildern der Kameras bzw. Detektoren kann insbesondere durch das bekannte sogenannte Spectral Unmixing erfolgen. Hierbei wird die Summe der spektralen Informationen für die einzelnen Fluorophore in separate Bilder aufgetrennt. Für das Spectral Unmixing können Algorithmen zum Einsatz kommen, die den spektralen Inhalt jedes Pixels eines Pixelstapels, wie er durch die Überlagerung erhalten wird, mit möglichen Summenkombinationen der bekannten Spektren der Fluorophormoleküle einer Probe vergleicht.

Die Parameter des erläuterten Spectral Unmixing können abhängig von der Bildposition oder der bildseitigen Apertur gewählt werden, um kleine Unterschiede in den spektralen Eigenschaften der Teilstrahlengänge (z.B. bedingt durch variierende Auftreffwinkel auf die dichroitischen Schichten) kompensieren zu können. Dabei ist es insbesondere möglich anstatt der Rohdaten der einzelnen Detektoren nur die Helligkeitswerte einzelner Farbstoffe zu übertragen.

Ziel der spektralen Detektion ist einen Aufteilung in einer ausreichende Zahl von Kanälen, um auch Farbstoffe trennen zu können, deren Spektren sich nur in geringem Umfang voneinander unterscheiden. Dennoch muss darauf geachtet werden, die Zahl der Farbkanäle nicht zu hoch zu wählen, da sonst das Signal in den Kanälen schwach und das Signal-Rausch-Verhältnis zu hoch ausfällt. Im Rahmen der vorliegenden Erfindung kann beispielsweise durch die Wahl von drei Strahlteilerprismen eine besonders vorteilhafte Aufteilung erzielt werden. Grundsätzlich ist im Rahmen der vorliegenden Erfindung aber auch die Verwendung von zwei oder mehr als drei Strahlteilerprismen möglich.

Die Erfindung wird nachfolgend unter Bezugnahme auf die beigefügten Zeichnungen näher erläutert, wobei die Zeichnungen bevorzugte Ausführungsformen der vorliegenden Erfindung und weitere Aspekte näher veranschaulichen.

Kurze Beschreibung der Zeichnungen

Figur 1 veranschaulicht eine Detektionseinheit für ein Mikroskopystem gemäß einer Ausführungsform der Erfindung in stark vereinfachter schematischer Teildarstellung.

Figur 2 veranschaulicht ein Mikroskopsystem mit einer Detektionseinheit gemäß einer Ausführungsform der Erfindung in stark vereinfachter schematischer Teildarstellung.

Figur 3 veranschaulicht ein Mikroskop mit zwei Detektionseinheiten gemäß einer Ausführungsform der Erfindung in stark vereinfachter schematischer Teildarstellung.

Figur 4 veranschaulicht eine Farbstrahlteilung in einem Mikroskopsystem mit einer Detektionseinheit gemäß einer Ausführungsform der Erfindung in Form eines Quantenausbeutediagramms.

Figur 5 veranschaulicht ein erfindungsgemäß bertreibbares Mikroskopsystem in stark vereinfachter schematischer Darstellung.

Ausführliche Beschreibung der Zeichnungen

In den nachfolgenden Figuren sind einander baulich oder funktional entsprechende Elemente zumindest teilweise mit identischen Bezugzeichen angegeben und werden in diesem Fall aus Gründen der Übersichtlichkeit nicht wiederholt erläutert. Wird nachfolgend auf Vorrichtungen, beispielsweise eine Farbstrahlteileranordnung, Bezug genommen, so gelten die entsprechenden Erläuterungen für mit diesen Vorrichtungen durchgeführte Verfahren in gleicher Weise.

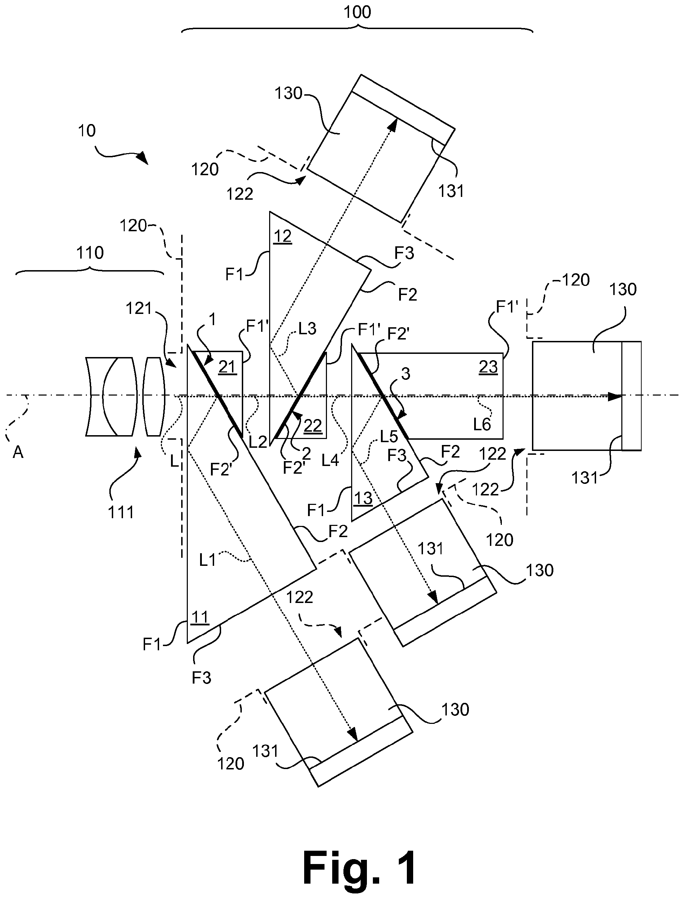

In Figur 1 ist eineDetektionseinheit für ein Mikroskopsystem gemäß einer besonders bevorzugten Ausführungsform der vorliegenden Erfindung in Form einer stark vereinfachten schematischen Teildarstellung veranschaulicht. Die Detektionseinheit ist dabei insgesamt mit 10 bezeichnet, eine als Teil der Detektionseinheit 10 bereitgestellte Farbstrahlteileranordnung ist mit 100 zusammengefasst. Ein Kameraadapter, der Teil der Detektionseinheit 10 oder separat dazu bereitgestellt sein kann, trägt insgesamt das Bezugszeichen 110.

Wie zuvor mehrfach erläutert, kann eine entsprechende Detektionseinheit 10 mit oder ohne einen entsprechenden Kameraadapter 110 an ein Mikroskop, das in Figur 1 nicht veranschaulicht ist, adaptiert werden, wodurch ein Mikroskopsystem gemäß einer Ausführungsform der Erfindung gebildet wird. Ein entsprechender Kameraadapter 110 kann dabei, wie mehrfach erwähnt, auch lediglich als mechanische Schnittstelle ausgebildet sein, die keine optischen Elemente 111 aufweist, welche in der Darstellung gemäß Figur 1 vorhanden sind. Mechanische Kopplungsmittel des Kameraadapters 110, die für eine mechanische Kopplung mit der Detektionseinheit 10 und einem in Figur 1 nicht veranschaulichten Mikroskop eingerichtet sind, sind nicht dargestellt. Die optischen Elemente 111 eines entsprechenden Kameraadapters 110 können insbesondere auch in ein Gehäuse einer Detektionseinheit 10, das hier abschnittsweiseund unzusammenhängend gestrichelt veranschaulicht und mit 120 bezeichnet ist, integriert sein. Der Kameraadapter 110 kann auch dauerhaft mit dem Gehäuse 120 oder mit einem entsprechenden Mikroskop gekoppelt sein.

Die in Figur 1 veranschaulichte Farbstrahlteileranordnung 100 umfasst ein erstes Strahlteilerprisma 11, ein zweites Strahlteilerprisma 12 und ein drittes Strahlteilerprisma 13. Das erste Strahlteilerprisma 11, das zweite Strahlteilerprisma 12 und das dritte Strahlteilerprisma 13 sind im dargestellten Beispiel dabei jeweils als Bauernfeind-Prismen ausgebildet. Die entsprechenden Winkel zwischen den einzelnen Prismenflächen werden nachfolgend erläutert.

Das erste Strahlteilerprisma 11, das zweite Strahlteilerprisma 12 und das dritte Strahlteilerprisma 13 weisen jeweils eine erste Prismenfläche F1, eine zweite Prismenfläche F2 und eine dritte Prismenfläche F3 auf. Die erste Prismenfläche F1 und die zweite Prismenfläche F2 sind dabei jeweils in einem spitzen ersten Winkel zueinander angeordnet. Dieser beträgt im dargestellten Beispiel 30°. Die zweite Prismenfläche F2 und die dritte Prismenfläche F3 sind jeweils in einem rechten oder stumpfen zweiten Winkel zueinander angeordnet, wobei im dargestellten Beispiel der zweite Winkel ein rechter Winkel ist. Die dritte Prismenfläche F3 und die erste Prismenfläche F1 sind hier jeweils in spitzen dritten Winkeln zueinander ausgerichtet, wobei diese Winkel im dargestellten Beispiel jeweils 60° betragen. Die jeweiligen Winkel sind Prismeninnenwinkel zwischen den hier jeweils senkrecht zu der Papierebene angeordneten ersten, zweiten bzw. dritten Prismenflächen F1, F2, F3. Die ersten, zweiten und dritten Prismenflächen F1, F2, F3 eines jeden Prismas 11, 12, 13 für sich, und in der in Figur 1 veranschaulichten Ausgestaltung auch die ersten, zweiten und dritten Prismenflächen F1, F2, F3 aller Prismen 11, 12, 13, stehen dabei senkrecht zu einer Bezugsebene, die in der Darstellung der Figur 1 in der Papierebene bzw. parallel zu dieser liegt.

Die ersten Prismenflächen F1 sind jeweils parallel zueinander und in einem rechten Winkel zu einer gemeinsamen optischen Achse A ausgerichtet, die hier in der Papierebene verlaufend und gegenüber ihrer realen Lage leicht nach oben versetzt veranschaulicht ist. Die gemeinsame optische Achse A verläuft durch die ersten Prismenflächen F1 und die zweiten Prismenflächen F2 der gezeigten Prismen 11, 12, 13. Die zweiten Prismenflächen F2 tragen jeweils in mit 1, 2 bzw. 3 bezeichneten Bereichen, die hier zusätzlich mit verstärkten Linien veranschaulicht sind, dichroitische Schichten mit spezifischen Kantenwellenlängen. Im dargestellten Beispiel beträgt die Kantenwellenlänge der dichroitischen Schicht 1 beispielsweise ca. 490 nm. Die Kantenwellenlänge der dichroitischen Schicht 2 beträgt beispielsweise ca. 565 nm. Die Kantenwellenlänge der dichroitischen Schicht 3 beträgt beispielsweise ca. 650 nm. Bei den dichroitischen Schichten 1, 2, 3 handelt es sich damit um Langpassfilter.

Dem ersten Strahlteilerprisma 11, dem zweiten Strahlteilerprisma 12 und dem dritten Strahlteilerprisma 13 ist jeweils ein prismatisches Ausgleichselement zugeordnet. Die Ausgleichselemente sind im hier dargestellten Beispiel als einzelne Ausgleichsprismen ausgebildet und mit 21, 22 und 23 bezeichnet. Die Ausgleichsprismen 21, 22, 23 weisen jeweils ebenfalls eine erste Prismenfläche F1' und eine zweite Prisenfläche F2' auf.

Die ersten Prismenflächen F1' der Ausgleichsprismen 21, 22, 23 sind ebenfalls parallel zueinander und senkrecht zu der gemeinsamen optischen Achse A ausgerichtet. Ein Abstand zwischen der jeweiligen ersten Prismenfläche F1' und der zweiten Prismenfläche F2' der Ausgleichsprismen 21, 22, 23 ist insbesondere derart gewählt, dass, in Kombination mit der jeweiligen, gemäß der Darstellung in Figur 1 unterschiedlichen, Größe der Strahlteilerprismen 11, 12, 13 die Glaswege der jeweils ausgebildeten Strahlanteile identisch bzw. derart aufeinander abgestimmt sind, dass beispielsweise Farblängsfehler der optischen Elemente 111 des Kameraadapters 110 oder eines optischen Systems des zugeordneten Mikroskops ausgeglichen werden. Wie damit bereits angesprochen, können die Strahlteilerprismen 11, 12 und 13 unterschiedliche Dimensionen aufweisen. Vorteilhafterweise sind die zweiten Prismenflächen F2' der Ausgleichsprismen 21, 22, 23 und die zweiten Prismenflächen F2 der Strahlteilerprismen 11, 12, 13 jeweils parallel zueinander ausgerichtet und ferner insbesondere miteinander verkittet. Wie erwähnt, können jedoch auch jeweils Luftspalte vorgesehen sein.

Zu dem weiteren Merkmalen und Vorteilen der Farbstrahlteileranordnung 100 sei auf die obigen Erläuterungen ausdrücklich verwiesen. Insbesondere weist das Gehäuse 120 der Farbstrahlteileranordnung 100 einen Eingang 121 auf, der zur direkten oder indirekten Kopplung mit dem hier in Figur 1 nicht dargestellten Mikroskop eingerichtet ist. Die Kopplung kann insbesondere über den hier dargestellten Kameraadapter 110 bzw. eine entsprechende rein mechanische Einheit erfolgen. Ferner weist ein entsprechendes Gehäuse insbesondere mehrere Ausgänge 122 auf, über die jeweils Lichtanteile von in die Farbstrahlteileranordnung 100 eingestrahltem Licht ausgekoppelt werden können. An diese Ausgänge 122 können jeweils Kameras bzw. Detektoren 130 angekoppelt werden, so dass diese nicht Teil der Farbstrahlteileranordnung 100 selbst sein müssen. Die Ankoppelung kann beispielsweise über standardmäßige Schnittstellen mechanischer Art, beispielsweise einen sogenannten C-Mount, erfolgen, die hier jedoch lediglich angedeutet sind. Die Kameras bzw. Detektoren 130 werden dabei jeweils in definierter Längsposition bezüglich einer Detektionsebene 131, beispielsweise einer Oberfläche eines Detektorchips, angeordnet. Die unterschiedlichen Kameras bzw. Detektoren 130 können entsprechende spektrale Anteile des in der Farbstrahlteileranordnung 100 spektral zerlegten Lichts detektieren. Die Detektionsebenen 131 können beispielsweise durch eine entsprechende Fokussierung bzw. Feineinstellung auch vor oder hinter die dargestellten Positionen verlagert werden.

Mittels der in Figur 1 veranschaulichten Farbstrahlteileranordnung kann Licht mehrerer Wellenlängenbereiche, hier in Form eines Strahls L veranschaulicht, das beispielsweise über den Kameraadapter 110 und dessen Optik 111 in die Farbstrahlteileranordnung 100 eingestrahlt wird, in spektrale Anteile aufgeteilt werden. Hierzu tritt das Licht des Strahls L zunächst über die erste Prismenfläche F1 des ersten Strahlteilerprismas 11 in dieses ein. An der dichroitischen Schicht 1 wird ein entsprechender Anteile dieses Lichts reflektiert und trifft, wie in Form eines Lichtstrahls L1 veranschaulicht, auf die erste Prismenfläche F1 dieses Strahlteilerprismas 11, an der er erneut, insbesondere total, reflektiert werden kann. Der entsprechend ausgekoppelte Lichtanteil des Lichtstrahls L durchsetzt in Form des Lichtstrahls L1 die dritte Prismenfläche F3 des ersten Strahlteilerprismas 11, tritt aus dem ersten Strahlteilerprisma 11 aus und trifft eine entsprechende Kamera bzw. einen entsprechenden Detektor 130.

Ein verbleibender spektraler Anteil des Lichtstrahls L durchsetzt die dichroitische Schicht 1, durchstrahlt das Ausgleichsprisma 21, tritt aus diesem aus und tritt, wie in Form eines Lichtstrahls L2 veranschaulicht, über die erste Prismenfläche F1 des zweiten Strahlteilerprismas 12 in dieses ein. Wiederum wird ein Anteil des entsprechenden Lichts, wie weiter in Form eines Lichtstrahls L3 veranschaulicht, spektral selektiv an der dichroitischen Schicht 2 ausgekoppelt. Entsprechendes gilt für das dritte Strahlteilerprisma 13, wie mit Lichtstrahlen L4 und L5 veranschaulicht. Hier nicht an der entsprechenden dichroitischen Schicht 3 reflektiertes Licht durchsetzt in Form eines Lichtstrahls L6 diese dichroitische Schicht und das zugeordnete Ausgleichsprisma 23 und tritt in rechts gezeigte Kamera 130 ein.

In Figur 2 ist ein Mikroskopsystem 200 gemäß einer Ausführungsform der Erfindung mit einer Farbstrahlteileranordnung 100, die Teil einer Detektionseinheit 10 ist, in einer stark vereinfachten Teildarstellung veranschaulicht. Die Detektionseinheit 10 wird hier auch als "erste" Detektionseinheit 10 bezeichnet. Die Farbstrahlteileranordnung 100 und der Kameraadapter 110 wurden bereits zuvor erläutert und sind hier nochmals vereinfacht dargestellt. Auf eine Darstellung des Gehäuses 120 und seiner Ein- und Ausgänge 121, 122 sowie auf die Bezeichnung der Prismenflächen wurde Es wurde ferner lediglich ein dem Lichtstrahl L6 entsprechender Lichtanteil veranschaulicht, der auf die hier rechts dargestellte Kamera trifft. Die Farbstrahlteileranordnung 100 kann wie die Farbstrahlteileranordnung 100 gemäß Figur 1 oder abweichend ausgebildet sein. Die Figur 2 ist nicht maßstabsgerecht, so kann insbesondere die Farbstrahlteileranordnung 100 im Vergleich zu den anderen Komponenten des Mikroskopsystems 200 deutlich kleiner ausgebildet sein.

Als Komponenten des Mikroskopsystems 200 sind ein Objektiv 103, ein Teilerspiegel 102, eine Beleuchtungsoptik 101, ein optional vorhandener Sperrfilter 105, eine Tubusoptik 106, beispielsweise eine einfache Tubuslinse, und ein optional vorhandener Umlenkspiegel 107 veranschaulicht. Zwischen dem Objektiv 103 und der Tubusoptik 106 ist ein Unendlichstrahlengang U ausgebildet. An dem Umlenkspiegel 107 wird die optische Achse A im dargestellten Beispiel in der Papierebene nach rechts geknickt, fehlt der Umlenkspiegel 107, setzt sie sich nach unten fort und die weiteren Elemente werden entsprechend ausgerichtet. Aus diesen und weiteren Alternativen wählt der Fachmann insbesondere je nach dem vorhandenen Platzangebot aus. Das Objektiv 103 und die Tubusoptik 106 definieren als optisches System wesentlich die Abbildungseigenschaften des Mikroskopsystems 200, auf die, wie mehrfach erwähnt, der Kameraadapter 110 und/oder die Farbstrahlteileranordnung 100, beispielsweise zum Ausgleich verbleibender Farblängsfehler, abgestimmt werden können.

Über die Beleuchtungsoptik 101 wird mittels einer Lichtquelle 141 bereitgestelltes Beleuchtungslicht auf eine Probe 104 bzw. ein Präparat eingestrahlt. Die Lichtquelle kann eine übliche Niedervolt- oder LED- Lichtquelle sein, deren Licht auch beispielsweise mittels nicht veranschaulichter Lichtleiter eingekoppelt werden kann. Die Lichtquelle bildet zusammen mit der Beleuchtungsoptik 101 und dem Teilerspiegel 102 ein hier insgesamt mit 140 bezeichnetes Weitfeldbeleuchtungssystem, das eine Objektebene 104 bzw. eine in dieser angeordnete Probe 104' flächig beleuchtet. Auch das Objektiv 103 ist hier Teil des Weitfeldbeleuchtungssystems 140, da es zum Einstrahlen des Beleuchtungslichts in die Probe 104' bzw. in die Objektebene 140 verwendet wird.

Von der Probe 104' in der Objektebene 104 reflektiertes Licht bzw. Fluoreszenzlicht wird durch das Objektiv 103 und den Teilerspiegel 102 über die Tubusoptik 106 und den Umlenkspiegel 107 in eine Zwischenbildebene 108 abgebildet. Ist ein Sperrfilter 105 vorhanden, können bereits hier Lichtanteile ausgefiltert werden. Der Kameraadapter 110 ist dafür eingerichtet, entsprechendes Licht in eine Bildebene der Kameras bzw. Detektoren 130 zu fokussieren. Das Beobachtungslicht tritt also konvergierend in die Farbstrahlteileranordnung ein. Durch die genannten Komponenten, insbesondere die Tubusoptik 106 und die optischen Elemente 111 des Kameraadapters 110 wird ein Weitfelddetektionssystem 150 geschaffen, das sich insbesondere dadurch auszeichnet, dass in ihm keine Einfach- oder Mehrfachlochblende in einer zur Objektebene konjugierten Ebene angeordnet ist. Auch das Objektiv 103 ist hier Teil des Weitfelddetektionssystems 150, da es zum Sammeln des von der Probe 104' bzw. aus der Objektebene 140 abgestrahlten Lichts verwendet wird. Die Kameras bzw. Detektoren 130 sind hier als Flächendetektoren, insbesondere Monochromkameras, ausgebildet.

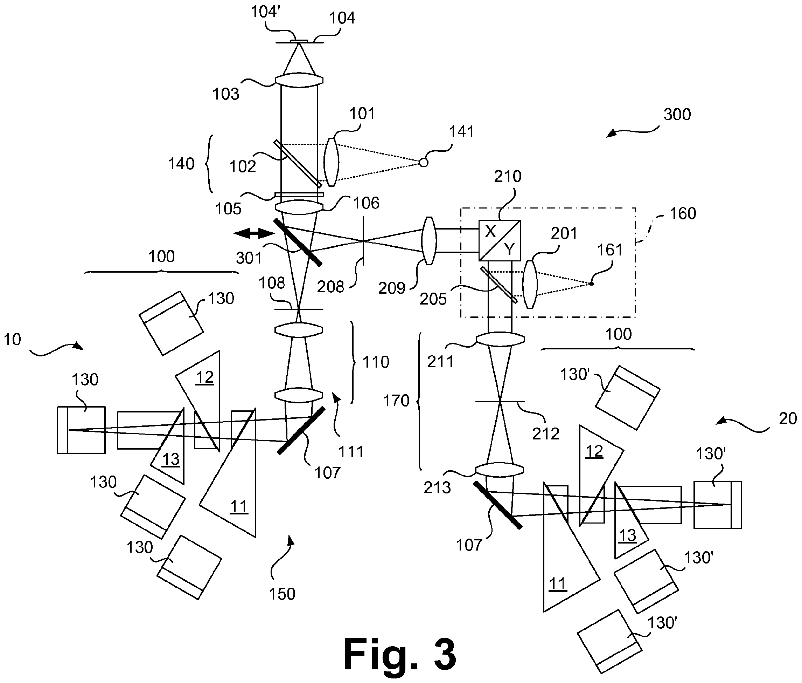

In Figur 3 ist ein Mikroskopsystem gemäß einer weiteren, besonders bevorzugten Ausführungsform der Erfindung dargestellt und insgesamt mit 300 bezeichnet. Das Mikroskopsystem 300 weist im Gegensatz zu dem Mikroskopsystem 200 gemäß Figur 2 zwei Detektionseinheiten 10, 20 auf, nämlich eine "erste" Detektionseinheit 10 und eine "zweite" Detektionseinheit 20. Mittels eines schaltbaren bzw. in Pfeilrichtung verschiebbaren Umschaltspiegels 301 kann Licht über entsprechende Strahlengänge wahlweise in die erste Detektionseinheit 10 oder in die zweite Detektionseinheit 20 geführt werden. In der in Figur 3 gezeigten Momentaufnahme wird Licht über den Umschaltspiegel 301 in die zweite Detektionseinheit 20 geführt und in der Bildebene an dem Umschaltspiegel nach rechts ausgekoppelt. Befindet sich der Umschaltspiegel nicht in der veranschaulichten Position, wird das Licht weiter nach unten abgestrahlt.

Die erste Detektionseinheit 10 ist wie in dem Mikroskopsystem 200 gemäß Figur 2 an ein Weitfelddetektionssystem 150 angebunden bzw. Teil desselben. Im Gegensatz zur Darstellung gemäß Figur 2 verläuft dabei der Strahlengang in dem Weitfelddetektionssystem 150 aufgrund der abweichenden Anordnung des Umlenkspiegels 107 zunächst nach unten und knickt an dem Umlenkspiegel 107 in der Papierebene nach links ab. Auch hier sind abweichende Ausgestaltungen möglich. Auch ein Weitfeldbeleuchtungssystem 140 ist in dem Mikroskopsystem 300 gemäß Figur 3 wie in dem Mikroskopsystem 200 gemäß Figur 2 vorhanden. Es wird daher auf die Erläuterungen zu Figur 2 ausdrücklich verwiesen.

Zusätzlich ist in dem Mikroskopsystem 300 gemäß Figur 3 jedoch ein Konfokalbeleuchtungssystem vorgesehen, das hier insgesamt mit 160 bezeichnet ist. Das Konfokalbeleuchtungssystem 160 verfügt über eine Punktlichtquelle 161. Bei der Punktlichtquelle kann es sich im dargestellten Beispiel insbesondere um eine Einfachlochblende handeln, in deren Blendenöffnung Laserlicht fokussiert wird, oder um ein Ende einer nicht dargestellten Lichtleitfaser, aus der Licht punktförmig austritt. Die Punktlichtquelle 161 ist mit einer Zwischenbildebene 208 und mit der Objektebene 104 konjugiert, so dass das Beleuchtungslicht des Konfokalbeleuchtungssystems 160 punktförmig in die Objektebene 104 fokussiert wird.

Teil des Konfokalbeleuchtungssystems 160 sind ferner eine Beleuchtungsoptik 201, ein Teilerspiegel 205 und eine xy-Scaneinheit 210. Mittels der Beleuchtungsoptik 201 und des Teilerspiegels 205 kann das Beleuchtungslicht der Punktlichtquelle 161 in den Strahlengang eingekoppelt werden. Typischerweise handelt es sich dabei um Fluoreszenzanregungslicht, das an dem Teilerspiegel 205 reflektiert wird, wohingegen von der Probe 104' abgestrahltes Licht den Teilerspiegel 205 zumindest in Teilen ungehindert passieren kann. Mittels der xy-Scaneinheit 210, die, wie erwähnt, sich vorteilhafterweise in der telezentrischen Ebene bzw. einer mit dieser konjugierten Ebene befindet, kann das eingekoppelte Licht der Punktlichtquelle 161 in an sich bekannter Weise abgelenkt und daher dessen Fokuspunkt in der Objektebene 104 lateral verschoben werden. Auf diese Weise ist eine Abtastung der Probe 104' in der Objektebene 104 möglich, wie grundsätzlich bekannt. Als weiteres, ebenfalls an sich bekanntes optisches Element ist ein Scanokular 209 vorhanden.

Von der Probe 104' aus der Objektebene 104 abgestrahltes Licht tritt, nachdem es unter anderem das Objektiv 103 und die Tubusoptik 106 durchstrahlt hat, über das Scanokular 209 in die xy-Scaneinheit 210 ein und erfährt daher eine Ablenkung in umgekehrter Richtung wie das Beleuchtungslicht. Es durchsetzt sodann den Teilerspiegel 205 und wird über eine Pinholeoptik 211 auf eine Einfachlochblende 212 (Pinhole) fokussiert. Aufgrund der Anordnung der Einfachlochblende 212 in einer zur Objektebene 104 konjugierten Ebene kann im Wesentlichen nur das Licht aus der Objektebene 104 die Einfachlochblende 212 durchstrahlen und über eine Detektoroptik 213 und einen weiteren Umlenkspiegel 107 in die Detektionseinheit 20 eingestrahlt werden. Die Pinholeoptik 211, die Einfachlochblende 212 und die Detektoroptik 213 bilden damit ein Konfokaldetektionssystem, das in Figur 3 mit 170 bezeichnet ist. Abweichend zur Darstellung in der Figur 3 kann zwischen der Einfachlochblende 212 und der Detektoroptik 213 ein Lichtleiter angeordnet sein. Die Detektionseinheit 20 kann anstatt mit typischen Kameras 130 mit Punktdetektoren 130' ausgestattet werden, die lediglich in einem begrenzten Bereich eine Lichtintensität messen.

Ist vorstehend jeweils von einem "Weitfeldbeleuchtungssystem", einem "Konfokalbeleuchtungssystem", einem "Weitfelddetektionssystem" und einem "Konfokaldetektionssystem" die Rede, versteht sich, dass die in den Figuren 2 und 3 jeweils explizit mit den Bezugszeichen 140, 150, 160 und 170 bezeichneten optischen Komponenten alleine jeweils nicht für eine entsprechende Beleuchtung bzw. Detektion ausreichen und weitere dargestellte Komponenten erforderlich sind, die jedoch nicht explizit von den Bezugszeichen 140, 150, 160 und 170 umfasst sind, und die ggf. auch Teil mehrerer entsprechender Systeme sein können. In sämtlichen Fällen können die Strahlengänge mittels Umlenkspiegeln 107 beliebig umgelenkt werden.

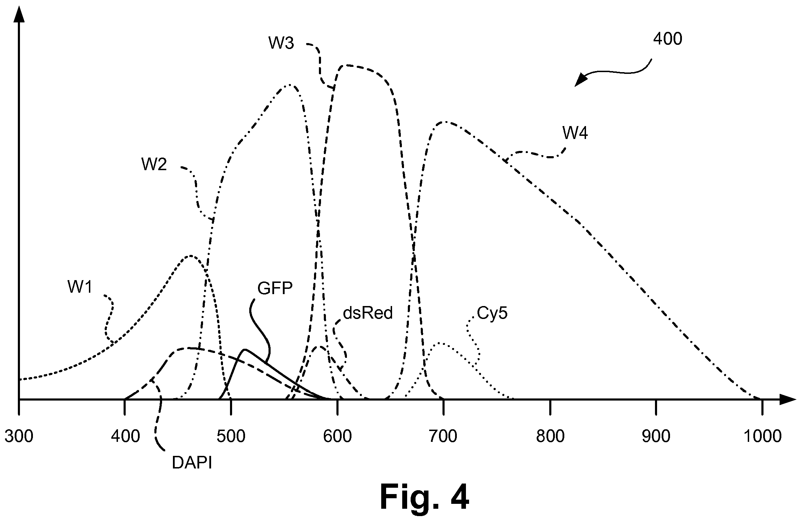

In Figur 4 ist eine Strahlteilung unter Verwendung eines Farbstrahlteilers gemäß einer besonders bevorzugten Ausführungsform der vorliegenden Erfindung in Form eines Quantenausbeutediagramms 400 veranschaulicht. Hierbei ist eine Quantenausbeute auf der Ordinate gegenüber einer Wellenlänge in Nanometern auf der Abszisse aufgetragen.

Mit WI, W2, W3 und W4 sind dabei Wellenlängenanteile veranschaulicht, die von den unterschiedlichen spektralen Kanälen einer entsprechenden Farbstrahlteileranordnung detektiert werden können. Mit W1 ist ein Blau-Kanal, mit W2 ein Grün-Kanal, mit W3 ein Orange-Kanal und mit W4 ein Rot-Kanal bezeichnet. Die Spektren unterschiedlicher Fluoreszenzfarbstoffe sind mit ihren jeweiligen in der Fachwelt bekannten Abkürzungen bezeichnet.

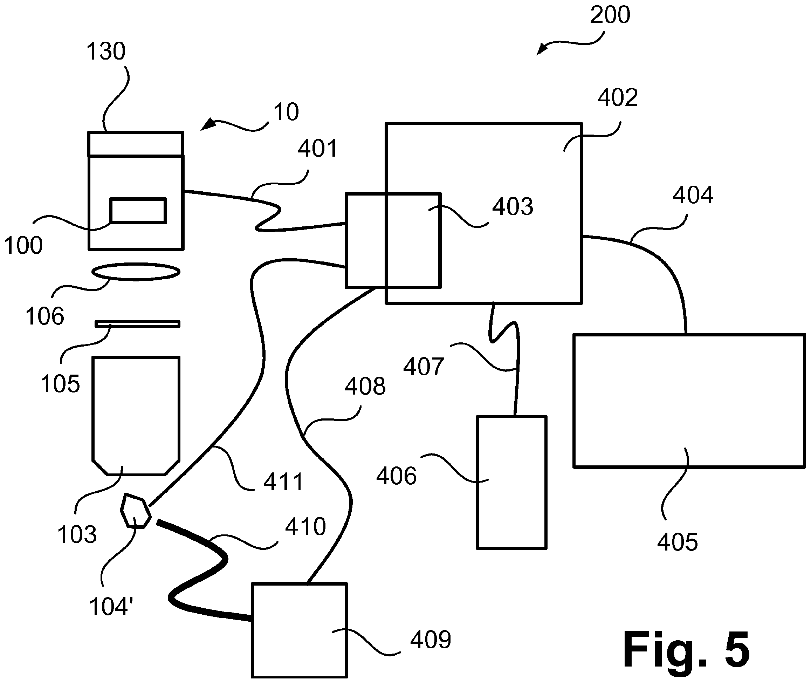

In Figur 5 ist ein weiteres Mikroskopsystem, das erfindungsgemäß betreibbar ist bzw. zur Durchführung eines erfindungsgemäßen Verfahrens eingerichtet sein kann, stark vereinfacht veranschaulicht und insgesamt, wie zuvor in Figur 2, mit 200 bezeichnet. Das Mikroskopsystem 200 umfasst, wie hier ebenfalls stark vereinfacht veranschaulicht, eine Farbstrahlteileranordnung 100, wie sie zuvor in unterschiedlichen Ausgestaltungen erläutert wurde. Diese ist in Figur 5, wie zuvor, als Teil einer Detektionseinheit 10 veranschaulicht.

Die Detektionseinheit 10 umfasst im hier veranschaulichten Beispiel mehrere Sensoren bzw. Kameras, wie sie bereits oben erläutert wurden, und je nach Ausgestaltung des Mikroskopsystems 200 beliebige weitere optische Elemente wie insbesondere Bandpassfilter und dergleichen. Je nach Ausbildung der Farbstrahlteileranordnung 100 und der damit bereitgestellten Lichtanteile kann eine entsprechende Anzahl von Sensoren bzw. Kameras vorhanden sein. Diese Kameras bzw. Sensoren sind, ebenso wie Bildaufnahme- bzw. Auswerteeinrichtungen, die den Sensoren bzw. Kameras in der Detektionseinheit 10 zugeordnet sein können, in Figur 4 aus Gründen der Übersichtlichkeit nur in Form einer einzigen Kamera 130 nochmals veranschaulicht. Auf die obigen Erläuterungen wird verwiesen.

Mittels der Sensoren bzw. Kameras 130 in der Detektionseinheit 10 können insbesondere digitale Bilddaten erhalten werden, die insbesondere über eine Datenverbindung 401 von der Detektionseinheit 10 an eine Recheneinheit 402, beispielsweise einen PC oder eine dedizierte Mikroskopsteuerung, übertragen werden können. In der Recheneinheit 402 kann dabei eine geeignete Software installiert sein, mittels derer entsprechend erhaltene Bilddaten ausgewertet werden können. Es versteht sich, dass zumindest ein Teil der dabei erhaltenen Bilddaten auch in Hardware, beispielsweise in einem Grafikprozessor (GPU) ausgewertet werden können. Eine entsprechende Software kann beispielsweise mit dem Grafikprozessor interagieren.

Über dieselbe Datenverbindung 401 oder eine separate Steuerleitung kann auch eine Ansteuerung der Detektionseinheit 10 bzw. ihrer hier nicht im Detail veranschaulichten Farbstrahlteileranordnung 100, aber auch der Sensoren bzw. Kameras 130 vorgenommen werden. Hierzu wird eine ebenfalls in Soft- und/oder Hardware implementierte Steuereinheit 403 verwendet.

Das Mikroskopsysten 200 kann dabei mittels der Sensoren der Detektionseinheit 10 Einzelbilddaten erfassen, die Einzelbilddaten und/oder unter Verwendung der Einzelbilddaten erhaltene Bilddaten mittels der Recheneinheit 402 auswerten, und auf Grundlage der Auswertung eine Ansteuerung vornehmen, wie ebenfalls zuvor im Detail erläutert.

Wie erwähnt, können beispielsweise die Sensoren bzw. Kameras 130 der Detektionseinheit 10 entsprechend angesteuert werden. Beispielsweise können mittels einer entsprechenden Steuereinheit 403 ein Verstärkungsfaktor zumindest eines der Sensoren bzw. zumindest einer der Kameras 130 oder andere Parameter, z.B. ein interessierender Bereich oder Parameter eines sogenannten Pixel-Binning, eingestellt werden. Auch eine Bewegung bzw. ein Austausch entsprechender Sensoren bzw. Kameras 130 kann nach Maßgabe einer entsprechenden Ansteuerung erfolgen.

Über eine weitere Datenverbindung 404 kann ein Anzeigegerät 405, beispielsweise ein Monitor, an die Recheneinheit 402 angebunden sein. Das Anzeigegerät 405 kann alternativ auch Teil der Recheneinheit 402 sein bzw. in einem gemeinsamen Gehäuse mit dieser untergebracht sein. Auf dem Anzeigegerät 405 kann ein Benutzer die Bilddaten, die mittels der Sensoren bzw. Kameras in der Detektionseinheit 10 erhalten und in der Recheneinheit 402 verarbeitet wurden, betrachten. Die Verarbeitung der Bilddaten in der Recheneinheit 402 kann dabei insbesondere eine spektrale Entmischung, eine Überlagerung von Bilddaten aus unterschiedlichen spektralen Kanälen, insbesondere mit jeweiliger Intensitätsanpassung, und beliebige aus dem Bereich der Bildverarbeitung bekannte Maßnahmen umfassen. Beispielsweise können die Bilddaten aus bestimmten oder allen Farbkanälen oder ein zusammengesetztes Bild einem Weiß- bzw. Farbabgleich, einer Nullwertsubtraktion, einer digitalen Filterung, einer Normalisierung, einem Kontrastausgleich, einer Kontrasterhöhung, einer Schärfung oder einer Segmentierung unterworfen werden.

Auf Grundlage des auf dem Anzeigegerät 405 angezeigten Bilds kann ein Benutzer über eine Benutzerschnittstelle 406, die mit einer weiteren Datenverbindung 407 mit der Recheneinheit 402 gekoppelt sein kann, Parameter der Bildverarbeitung und/oder Parameter der Ansteuerung der Detektionseinheit 10 verändern. Alternativ zu einer derartigen manuellen Ansteuerung kann auch eine rein automatische Ansteuerung vorgesehen sein, die beispielsweise anhand hinterlegter Regeln, insbesondere in Form von Lookup-Tabellen, Kennlinien und dergleichen, entsprechende Parameter ändert. Auch Mischformen der Ansteuerung sind im Rahmen der vorliegenden Erfindung möglich. Die Benutzerschnittstelle 406 kann, wie das Anzeigegerät 405, Teil der Recheneinheit 402 sein oder in einem gemeinsamen Gehäuse mit dieser untergebracht sein. Die Benutzerschnittstelle 406 kann insbesondere über bekannte Eingabemittel wie reale oder virtuelle Tasten verfügen. Auch eine Maus, ein Trackball, ein Tablet oder andere, insbesondere zur Manipulation von Bilddaten geeignete Eingabemittel können vorgesehen sein. Die Benutzerschnittstelle 406 und das Anzeigegerät 405 können auch zumindest teilweise als ein Gerät ausgebildet sein, beispielsweise in Form eines Touchscreens.

Mittels der Steuereinheit 403 kann in der in Figur 4 veranschaulichten Ausführungsform des Mikroskopsystems 200 über eine weitere Datenverbindung 408 auch eine Beleuchtungseinheit 409 angesteuert werden. Die Beleuchtungseinheit 409 ist dabei insbesondere dafür ausgebildet, Beleuchtungslicht in Form von Fluoreszenzanregungslicht einer oder mehrerer definierter Wellenlängen oder Wellenlängenbereiche bereitzustellen. Dieses Beleuchtungslicht kann in kohärenter oder nichtkohärenter Form, insbesondere unter Verwendung modulierbarer Lichtquellen wie LED, bereitgestellt werden. Die Wellenlängen oder Wellenlängenbereiche können aber insbesondere auch mittels geeigneter, insbesondere wechselbarer, Filter oder Filteranordnungen wie Filterrädern, Filterschiebern, Filterwürfeln und dergleichen ausgewählt werden. Die Beleuchtungseinheit 409 kann eine oder mehrere, in Figur 4 nicht gesondert veranschaulichte Lichtquellen umfassen, die jeweils mono- oder polychromatisches, linear, zirkular oder unpolarisiertes Licht liefern können. Im Falle mehrerer Lichtquellen kann deren Licht insbesondere auch, beispielsweise mittels Strahlteilern oder anderen Einkoppeleinrichtungen, in einen gemeinsamen Beleuchtungsstrahlengang eingekoppelt werden. Das Licht einer oder mehrerer Lichtquellen kann, wie in dem in Figur 4 dargestellten Beispiel veranschaulicht, beispielsweise mittels einer Faseroptik 410 auf eine Probe, die auch hier mit 104' bezeichnet ist, eingestrahlt werden. Anstelle der Verwendung einer Faseroptik 410 ist auch die Verwendung klassischer, mit teildurchlässigen Elementen, Linsen, Spiegeln und dergleichen arbeitenden Auflicht- oder Durchlichteinrichtungen möglich, wie anhand der Figuren 2 und 3 zuvor gezeigt. Auch eine Verstellbarkeit der Position der Probe 104' kann vorgesehen sein. Es können jeweils auch Beleuchtungseinheiten 140 bzw. 160 vorgesehen sein, wie sie zuvor unter Bezugnahme auf die Figuren 2 und 3 erläutert wurden. Auch diese können in Ausgestaltungen der Erfindung entsprechend angesteuert werden.

Insbesondere kann in dem in Figur 4 veranschaulichten Mikroskopsystem 200 vorgesehen sein, eine adaptive Steuerung der Beleuchtungseinrichtung 409 in Abhängigkeit von mittels der Detektionseinheit 10 erhaltenen und in der Recheneinheit 402 ausgewerteten Bilddaten vorzunehmen. Auf diese Weise ist eine gezielte Anpassung von Beleuchtungsparametern, beispielsweise der Lichtintensität oder der ausgewählten Wellenlänge, einer oder mehrerer Beleuchtungseinheiten vornehmbar. Eine derartige Anpassung kann manuell, teilautomatisch oder vollautomatisch vorgenommen werden. Insbesondere bei der Verwendung mehrerer Fluoreszenzfarbstoffe, die sich durch unterschiedliche Anregungswellenlängen anregen lassen, können auf diese Weise beispielsweise die unterschiedlichen Intensitäten aneinander angeglichen werden, um eine Überstrahlung des erhaltenen Bilds durch einen Fluoreszenzkanal zu verhindern. Mit anderen Worten kann durch eine Beleuchtungsanpassung ebenfalls ein Intensitätsausgleich zwischen unterschiedlichen Fluoreszenzkanälen erzielt werden. Weil dabei stets nur so viel Licht eingestrahlt wird, wie für eine optimale Detektion erforderlich ist, kann auf diese Weise die Probe geschont und eine zu rasche Alterung verhindert werden.

Mittels einer weiteren Datenverbindung 411 kann die Position und Orientierung der Probe 104' angepasst werden.

Als weitere Elemente des Mikroskopsystems 200, das im Übrigen über sämtliche bekannten Elemente eines (Fluoreszenz-)Mikroskopsystems verfügen kann, sind ein Objektiv 103, ein insbesondere als Multibandpassfilter ausgebildeter Sperrfilter 105 und eine Tubusoptik 103 veranschaulicht, die mit denselben Bezugszeichen wie die entsprechenden Elemente gemäß Figur 2 angegeben sind.

Es versteht sich, dass sämtliche erwähnten Datenverbindungen und alle weiteren Datenverbindungen, die in einem Mikroskopsystem 200 der gezeigten oder anderer Ausgestaltungen zum Einsatz kommen können, in Form von mono- oder bidirektionalen Datenverbindungen und kabelgestützt oder kabellos, beispielsweise in Form von Wi-Fi-, Bluetooth-, Infrarot-, oder anderer bekannter Fernübertragungstechniken realisiert sein können.

Bezugszeichenliste

| | |
|---|---|
| 10,20 | Detektionseinheit |
| 100 | Farbstrahlteileranordnung |
| 110 | Kameraadapter |
| 111 | Optische Elemente in Kameraadapter |
| 120 | Gehäuse |
| 121 | Eingang Gehäuse |
| 122 | Ausgang Gehäuse |
| 130, 130' | Kamera, Detektor |
| 131 | Detektionsebene |
| 200,300 | Mikroskopsystem |
| 11, 12, 13 | erstes, zweites, drittes Strahlteilerprisma |
| 1, 2, 3 | erste, zweite, dritte dichroitische Schicht |
| F1, F2, F3 | erste, zweite, dritte Prismenfläche am Strahlteilerprisma |
| 21, 22, 23 | erstes, zweites, drittes Ausgleichsprisma |
| F1', F2' | erste, zweite Prismenfläche am Ausgleichsprisma |
| A | optische Achse |
| U | Unendlichstrahlengang |
| L, L1-L6 | Lichtstrahlen, Teilstrahlen |
| 101, 201 | Beleuchtungsoptik |
| 102,205 | Teilerspiegel |
| 103 | Objektiv |
| 104 | Objektebene |
| 104' | Objekt |
| 105 | Sperrfilter |
| 106 | Tubusoptik |
| 107 | Umlenkspiegel |
| 108,208 | Zwischenbild |
| 140 | Weitfeldbeleuchtungssystem |
| 141 | Lichtquelle |
| 150 | Weitfelddetektionssystem |
| 160 | Konfokalbeleuchtungssystem |
| 161 | Punktlichtquelle |
| 170 | Konfokaldetektionssystem |
| 209 | Scanokular |
| 210 | xy-Scaneinheit |
| 211 | Pinholeoptik |
| 212 | Einfachlochblende |
| 213 | Detektoroptik |
| 300 | Quantenausbeutediagramm |

301    Umschaltspiegel

W1-W4    Quantenausbeuten Farbkanäle

402    Recheneinheit
403    Steuereinheit
405    Anzeigegerät
406    Benutzerschnittstelle
409    Beleuchtungseinheit
410    Faseroptik

401, 404, 407, 408, 411    Datenverbindungen

**Patentansprüche**

1.  Mikroskopsystem (200, 300) mit einer ersten Detektionseinheit (10) oder mit mehreren Detektionseinheiten (10, 20), die eine erste Detektionseinheit (10) und wenigstens eine zweite Detektionseinheit (20) umfassen, wobei die erste Detektionseinheit (10) oder zumindest eine der mehreren Detektionseinheiten (10, 20) eine Farbstrahlteileranordnung (100) mit drei Strahlteilerprismen (11, 12, 13) aufweist,
    **dadurch gekennzeichnet,**

    - **dass** jedes der Strahlteilerprismen (11, 12, 13) eine erste, eine zweite und eine dritte Prismenfläche (F1, F2, F3) aufweist und auf oder parallel zu jeder der zweiten Prismenflächen (F2) der Strahlteilerprismen (11, 12, 13) eine dichroitische Schicht (1, 2, 3) bereitgestellt ist,
    - **dass** die ersten Prismenflächen (F1) der Strahlteilerprismen (11, 12, 13) in dieselbe Richtung weisen und parallel zueinander in einem rechten Winkel zu einer optischen Achse (A) durch die ersten und zweiten Prismenflächen (F1, F2) der Strahlteilerprismen (11, 12, 13) ausgerichtet sind,
    - **dass** die ersten und zweiten Prismenflächen (F1, F2) der Strahlteilerprismen (11, 12, 13) jeweils in spitzen ersten Winkeln zueinander, die zweiten und dritten Prismenflächen (F2, F3) der Strahlteilerprismen (11, 12, 13) jeweils in rechten oder stumpfen zweiten Winkeln zueinander, und die dritten und ersten Prismenflächen (F3, F1) der Strahlteilerprismen (11, 12, 13) jeweils in spitzen dritten Winkeln zueinander ausgerichtet sind, und
    - **dass** jedem der Strahlteilerprismen (11, 12, 13) ein prismatisches Ausgleichselement (21, 22, 23) mit einer ersten und mit einer zweiten Prismenfläche (F1', F2') zugeordnet ist, wobei die zweite Prismenfläche (F2') eines jeden der Ausgleichselemente (21, 22, 23) in einer gemeinsamen Ebene mit oder parallel zu der zweiten Prismenfläche (F2) des jeweils zugeordneten Strahlteilerprismas (11, 12, 13) angeordnet ist.

2.  Mikroskopsystem (300) nach Anspruch 1, das ein Objektiv (103) und eine bildseitig des Objektivs (103) angeordnete Tubusoptik (106) aufweist, wobei ein Unendlichstrahlengang (U) zwischen dem Objektiv (103) und der Tubusoptik (106) ausgebildet ist und die Tubusoptik (106) Licht aus dem Unendlichstrahlengang (U) in eine Bildebene (108, 208), die bildseitig der Tubusoptik (106) angeordnet und zu einer Objektebene (104) konjugiert ist, fokussiert.

3.  Mikroskopsystem (200, 300) nach Anspruch 2, das ein Weitfeldbeleuchtungssystem (140) und ein Weitfelddetektionssystem (150) zur flächigen Beleuchtung und Erfassung eines Bereichs der Objektebene (104) aufweist.

4.  Mikroskopsystem (200, 300) nach Anspruch 3, bei dem das Weitfeldbeleuchtungssystem (140) einen in dem Unendlichstrahlengang (U) angeordneten Teilerspiegel (102) aufweist, der Licht einer Lichtquelle (141) in den Unendlichstrahlengang (U) zwischen dem Objektiv (103) und der Tubusoptik (106) oder in einen weiteren Unendlichstrahlengang einkoppelt.

5.  Mikroskopsystem (300) nach einem der Ansprüche 1 bis 4, das ein Konfokalbeleuchtungssystem (160) und ein Konfokaldetektionssystem (170) zur punktförmigen Abtastung eines Bereichs der Objektebene (104) aufweist.

6.  Mikroskopsystem (300) nach Anspruch 5, bei dem das Konfokalbeleuchtungssystem (160) eine Punktlichtquelle (161) in einer zu der Objektebene (104) und der Bildebene (208) konjugierten Ebene aufweist, und bei dem das Konfokaldetektionssystem (170) eine Lochblende (212) in der zu der Objektebene (104) und der Bildebene (208) konjugierten Ebene oder einer weiteren zu der Objektebene (104) und der Bildebene (208) konjugierten Ebene aufweist.

7. Mikroskopsystem (300) nach Anspruch 5 oder 6, bei dem das Konfokalbeleuchtungssystem (160) eine Scaneinrichtung (210) zur Ablenkung von Beleuchtungslicht aufweist.

8. Mikroskopsystem (300) nach einem der Ansprüche 5 bis 7, das die mehreren Detektionseinheiten (10, 20) umfassend die erste Detektionseinheit (10) und die wenigstens eine zweite Detektionseinheit (20) aufweist, von welchen die erste Detektionseinheit (10) dem Weitfelddetektionssystem (150) zugeordnet ist und die wenigstens eine zweite Detektionseinheit (20) dem Konfokaldetektionssystem (170) zugeordnet ist.

9. Mikroskopsystem (300) nach einem der Ansprüche 5 bis 8, bei dem bildseitig der Tubusoptik (106) ein in zwei Positionen anordenbarer Umschaltspiegel (301) bereitgestellt ist, wobei in einer ersten Position des Umschaltspiegels (301) Licht in das Weitfelddetektionssystem (150) und in einer zweiten Position des Umschaltspiegels Licht in das Konfokaldetektionssystem (170) eingestrahlt wird.

10. Mikroskopsystem (200, 300) nach einem der vorstehenden Ansprüche, bei der bei den Strahlteilerprismen (11, 12, 13) die ersten Winkel identische Winkelbeträge, die zweiten Winkel identische Winkelbeträge und die dritten Winkel identische Winkelbeträge aufweisen.

11. Mikroskopsystem (200, 300) nach Anspruch 10, bei der die ersten Winkel jeweils 30°, die zweiten Winkel jeweils 90° und die dritten Winkel jeweils 60° betragen, oder bei der die ersten Winkel jeweils 22,5°, die zweiten Winkel jeweils 112,5° und die dritten Winkel jeweils 45° betragen.

12. Mikroskopsystem (200, 300) nach einem der vorstehenden Ansprüche, bei der die Strahlteilerprismen (11, 12, 13) jeweils als Bauernfeind-Prismen mit identischen Prismenwinkeln ausgebildet sind.

13. Mikroskopsystem (200, 300) nach einem der vorstehenden Ansprüche, bei der die Strahlteilerprismen (11, 12, 13) zueinander unterschiedliche Volumina aufweisen.

14. Mikroskopsystem (200, 300) nach einem der vorstehenden Ansprüche, bei dem die erste Detektionseinheit (10) oder jede der mehreren Detektionseinheiten (10, 20) ein Gehäuse (120) mit einem Eingang (121) umfasst, der werkzeugfrei von einem Detektionsabgang eines Mikroskops (200) lösbar ist.

15. Mikroskopsystem (200, 300) nach einem der vorstehenden Ansprüche, bei dem die Strahlteilerprismen (11, 12, 13) der ersten Detektionseinheit (10) oder jeder der mehreren Detektionseinheiten (10, 20) ein erstes, ein zweites und ein drittes Strahlteilerprisma (13) umfassen, wobei die optische Achse (A) senkrecht zu der ersten Prismenfläche (F1) des ersten Strahlteilerprismas (11) in die Strahlteileranordnung (100) eintritt und senkrecht zu der ersten Prismenfläche (F1') des Ausgleichselements (23), das dem dritten Strahlteilerprisma (13) zugeordnet ist, aus der Strahlteileranordnung (100) austritt, wobei multichromatisches Licht (L), das entlang der optischen Achse (A) in die Strahlteileranordnung (100) eingestrahlt wird, mittels der dichroitischen Schichten (1, 2, 3) in spektrale Anteile (L1-L6) zerlegt wird, wobei einer der spektralen Anteile (L6) über die erste Prismenfläche (F1') des Ausgleichselements (23), das dem dritten Strahlteilerprisma (13) zugeordnet ist, aus der Strahlteileranordnung (100) ausgestrahlt wird, und wobei weitere der spektralen Anteile (L1, L3, L5) jeweils über die dritten Prismenflächen (F3) des ersten, des zweiten und des dritten Strahlteilerprismas (11, 12, 13) aus der Strahlteileranordnung (100) ausgestrahlt werden.

16. Mikroskopsystem (200, 300) nach Anspruch 15, bei dem in der ersten Detektionseinheit (10) oder in jeder der mehreren Detektionseinheiten (10, 20) jeweils der ersten Prismenfläche (F1') des Ausgleichselements (23), das dem dritten Strahlteilerprisma (13) zugeordnet ist, und den dritten Prismenflächen (F3) der Strahlteilerprismen (11, 12, 13) jeweils ein Ausgang (122) zur Anbringung eines Detektors (130, 130') und/oder ein Detektor (130, 130') nachgeordnet ist.

17. Mikroskopsystem (200, 300) nach einem der vorstehenden Ansprüche, bei dem die Ausgleichselemente (21, 22, 23) derart ausgebildet sind, dass die spektralen Anteile des multichromatischen Lichts in der Farbstrahlteileranordnung (100) jeweils Glaswege zurücklegen, deren Längen sich um nicht mehr als einen vorbestimmten Betrag unterscheiden.

18. Verfahren zur mikroskopischen Abbildung unter Verwendung eines Mikroskopsystems (200, 300) mit einer Detektionseinheit (10) oder mit mehreren Detektionseinheiten (10, 20), die eine erste Detektionseinheit (10) und wenigstens eine zweite Detektionseinheit (20) umfassen, **dadurch gekennzeichnet, dass** ein Mikroskopsystem (200, 300) nach einem der vorstehenden Ansprüche verwendet wird, wobei mittels des Mikroskopsystems (200, 300) multichromatisches Licht in die erste Detektionseinheit (10) oder jeweils in eine der mehreren Detektionseinheiten (10, 20) entgestrahlt und in unterschiedliche spektrale Anteile zerlegt wird, wobei die spektralen Anteile jeweils durch Detektoren (130, 130') erfasst werden.

19. Verfahren nach Anspruch 18, bei dem ein Mikroskopsystem (300) verwendet wird, das ein Weitfeldbeleuchtungssystem (140) und ein Weitfelddetektionssystem (150) zur flächigen Beleuchtung und Erfassung eines Bereichs der Objektebene (104) sowie ein Konfokalbeleuchtungssystem (160) und ein Konfokaldetektionssystem (170) zur punktförmigen Abtastung eines Bereichs der Objektebene (104) aufweist, wobei das Verfahren einen Weitfeldbetriebsmodus und einen Konfokalbetriebsmodus umfasst, zwischen denen gemäß einer Benutzervorgabe umgeschaltet wird.

20. Verfahren nach Anspruch 18 oder 19, bei dem die durch die Detektoren (130, 130') erfassten unterschiedlichen spektralen Anteile zumindest teilweise mittels einer Recheneinheit prozessiert werden.

21. Verfahren nach Anspruch 20, bei dem das Prozessieren der unterschiedlichen spektralen Anteile eine Registrierung und Überlagerung zumindest eines Teils der unterschiedlichen spektralen Anteile umfasst.

22. Verfahren nach Anspruch 19, bei dem für zumindest einen Teil der unterschiedlichen spektralen Anteile Lageabweichungsdaten bereitgestellt und für die Registrierung verwendet werden.

23. Verfahren nach einem der Ansprüche 20 bis 22, bei dem das Prozessieren der unterschiedlichen spektralen Anteile eine Datenauswertung umfasst.

24. Verfahren nach Anspruch 23, bei dem auf Grundlage der Datenauswertung ein oder mehrere Detektions- und/oder Beleuchtungsparameter des Mikroskopsystems (200, 300) und/oder eine oder mehrere Detektionsparameter zumindest eines der Detektoren (130, 130') eingestellt werden.

25. Verfahren nach einem der Ansprüche 20 bis 24, bei dem das Prozessieren der unterschiedlichen spektralen Anteile eine spektrale Entmischung umfasst.

26. Verfahren nach Anspruch 25, bei dem die unterschiedlichen spektralen Anteile in Form von Pixeldaten erfasst werden und/oder bei dem das Prozessieren das Erzeugen von Pixeldaten umfasst, wobei ein Inhalt eines oder mehrerer Pixel, dessen oder deren Spektrum nur durch den Beitrag genau eines Fluorophors hervorgerufen wird, in den Pixeldaten ermittelt wird und dieser als Referenzwert für die spektrale Entmischung verwendet wird.

## Claims

1. Microscope system (200, 300) comprising a first detection unit (10) or a plurality of detection units (10, 20) which include a first detection unit (10) and at least one second detection unit (20), the first detection unit (10) or at least one of the plurality of detection units (10, 20) comprising a colour beam splitter arrangement (100) with three beam splitter prisms (11, 12, 13),
**characterised in**

- **that** each of the beam splitter prisms (11, 12, 13) comprises a first, a second and a third prism surface (F1, F2, F3), a dichroic layer (1, 2, 3) being provided on, or parallel to, each of the second prism surfaces (F2) of the beam splitter prisms (11, 12, 13),
- **that** the first prism surfaces (F1) of the beam splitter prisms (11, 12, 13) face into the same direction and are aligned parallel to one another at a right angle to an optical axis (A) through the first and second prism surfaces (F1, F2) of the beam splitter prisms (11, 12, 13),
- **that** the first and second prism surfaces (F1, F2) of the beam splitter prisms (11, 12, 13) are each aligned at acute first angles to one another, the second and third prism surfaces (F2, F3) of the beam splitter prisms (11, 12, 13) are each aligned at right or obtuse second angles to one another, and the third and first prism splitter (F3, F1) of the beam splitter prisms (11, 12, 13) are each aligned at acute third angles to one another, and
- **that** a prismatic compensating element (21, 22, 23) with a first and with a second prism surface (F1', F2') is associated with each of the beam splitter prisms (11, 12, 13), the second prism surface (F2') of each of the compensating elements (21, 22, 23) being arranged in a common plane with or parallel to the second prism surface (F2) of the respectively associated beam splitter prism (11, 12, 13).

2. The microscope system (300) according to claim 1, which comprises an objective (103) and a tubus optics (106) arranged on the image side of the objective (103), wherein an infinity beam path (U) is formed between the objective (103) and the tubus optics (106) and the tubus optics (106) focuses light from the infinity beam path (U) into an image plane (108, 208) which is arranged on the image side of the tubus optics (106) and is conjugate to an object plane (104).

3. The microscope system (200, 300) according to claim 2, comprising a wide field illumination system (140) and a wide field detection system (150) for areal illumination and detection of a region of the object plane (104).

4. The microscope system (200, 300) according to claim 3, wherein the wide field illumination system (140) comprises a divider mirror (102) arranged in the infinity beam path (U), which couples light from a light source (141) into the infinity beam path (U) between the objective (103) and the tubus optics (106) or into a further infinity beam path.

5. The microscope system (300) according to any one of claims 1 to 4, comprising a confocal illumination system (160) and a confocal detection system (170) for point scanning of a region of the object plane (104).

6. The microscope system (300) according to claim 5, wherein the confocal illumination system (160) comprises a point light source (161) in a plane conjugate to the object plane (104) and the image plane (208), and wherein the confocal detection system (170) comprises a pinhole (212) in the plane conjugate to the object plane (104) and the image plane (208) or in a further plane conjugate to the object plane (104) and the image plane (208).

7. The microscope system (300) according to claim 5 or 6, wherein the confocal illumination system (160) comprises scanning means (210) for deflecting illumination light.

8. The microscope system (300) according to any one of claims 5 to 7, comprising the plurality of detection units (10, 20) including the first detection unit (10) and the at least one second detection unit (20), of which the first detection unit (10) is associated with the wide field detection system (150) and the at least one second detection unit (20) is associated with the confocal detection system (170).

9. The microscope system (300) according to any one of claims 5 to 8, in which a switch mirror (301) which can be arranged in two positions is provided on the image side of the tubus optics (106), light being irradiated into the wide field detection system (150) in a first position of the switch mirror (301) and light being irradiated into the confocal detection system (170) in a second position of the switch mirror.

10. The microscope system (200, 300) according to any one of the preceding claims, wherein, in the beam splitting prisms (11, 12, 13), the first angles have identical angular magnitudes, the second angles have identical angular magnitudes and the third angles have identical angular magnitudes.

11. The microscope system (200, 300) according to claim 10, wherein the first angles are each 30°, the second angles are each 90°, and the third angles are each 60°, or wherein the first angles are each 22.5°, the second angles are each 112.5°, and the third angles are each 45°.

12. The microscope system (200, 300) according to any of the preceding claims, wherein the beam splitter prisms (11, 12, 13) are each designed as Bauernfeind prisms with identical prism angles.

13. The microscope system (200, 300) according to any one of the preceding claims, in which the beam splitter prisms (11, 12, 13) have mutually different volumes.

14. The microscope system (200, 300) according to any one of the preceding claims, wherein the first detection unit (10) or each of the plurality of detection units (10, 20) comprises a housing (120) with an input (121) that is detachable from a detection output of a microscope (200) without tools.

15. The microscope system (200, 300) according to any one of the preceding claims, wherein the beam splitter prisms (11, 12, 13) of the first detection unit (10) or each of the plurality of detection units (10, 20) comprise a first, a second and a third beam splitter prism (13), wherein the optical axis (A) enters the beam splitter arrangement (100) perpendicular to the first prism surface (F1) of the first beam splitter prism (11) and exits the beam splitter arrangement (100) perpendicular to the first prism surface (F1') of the compensating element (23) associated with the third beam splitter prism (13), wherein multichromatic light (L), which is irradiated along the optical axis (A) into the beam splitter arrangement (100) is split into spectral components (L1-L6) by means of the dichroic layers (1, 2, 3), wherein one of the spectral components (L6) is emitted via the first prism surface (F1') of the compensating element (23) which is associated with the third beam splitter prism (13) out of the beam splitter arrangement (100), and wherein further ones of the spectral components (L1, L3, L5) are emitted out of the beam splitter arrangement (100) via the third prism surfaces (F3) of the first, of the second and of the third beam splitter prism (11, 12, 13), respectively.

16. The microscope system (200, 300) according to claim 15, in which, in the first detection unit (10) or in each of the plurality of detection units (10, 20), an output (122) for attaching a detector (130, 130') and/or a detector (130, 130') is arranged downstream of the first prism face (F1') of the compensating element (23) associated with the third beam splitter prism (13) and of the third prism surfaces (F3) of the beam splitter prisms (11, 12, 13), respectively.

17. The microscope system (200, 300) according to any one of the preceding claims, in which the compensating elements (21, 22, 23) are designed in such a way that the spectral components of the multichromatic light in the colour beam splitter arrangement (100) each travel glass paths whose lengths do not differ by more than a predetermined amount.

18. A method for microscopic imaging using a microscope system (200, 300) with one detection unit (10) or with several detection units (10, 20) comprising a first detection unit (10) and at least one second detection unit (20), **characterized in that** a microscope system (200, 300) according to one of the preceding claims is used, wherein multichromatic light is emitted by means of the microscope system (200, 300) into the first detection unit (10) or in into one of the plurality of detection units (10, 20), respectively, and is split into different spectral components, wherein the spectral components are in detected by detectors (130, 130'), respectively.

19. The method according to claim 18, wherein a microscope system (300) is used having a wide field illumination system (140) and a wide field detection system (150) for areal illumination and detection of a region of the object plane (104), and a confocal illumination system (160) and a confocal detection system (170) for point scanning of a region of the object plane (104), the method comprising a wide field mode of operation and a confocal mode of operation switched between according to a user demand.

20. The method according to claim 18 or 19, in which the different spectral components detected by the detectors (130, 130') are at least partially processed by means of a computing unit.

21. The method according to claim 20, wherein processing the different spectral components comprises registering and superimposing at least a portion of the different spectral components.

22. The method according to claim 19, in which position deviation data are provided for at least a part of the different spectral components and are used for the registration.

23. The method according to any one of claims 20 to 22, wherein processing the different spectral components comprises data evaluation.

24. The method according to claim 23, wherein one or more detection and/or illumination parameters of the microscope system (200, 300) and/or one or more detection parameters of at least one of the detectors (130, 130') are adjusted based on the data evaluation.

25. The method according to any one of claims 20 to 24, wherein processing the different spectral components comprises spectral unmixing.

26. The method according to claim 25, wherein the different spectral components are detected in the form of pixel data and/or wherein the processing comprises generating pixel data, wherein a content of one or more pixels whose spectrum is caused only by the contribution of exactly one fluorophore is determined in the pixel data and this is used as a reference value for the spectral unmixing.

**Revendications**

1. Système de microscope (200, 300) avec une première unité de détection (10) ou avec une pluralité d'unités de détection (10, 20) qui comprennent une première unité de détection (10) et au moins une deuxième unité de détection (20), la première unité de détection (10) ou au moins une de la pluralité d'unités de détection (10, 20) présentant un agencement de séparateur de faisceau de couleur (100) avec trois prismes séparateurs de faisceau (11, 12, 13), **caractérisé en ce**

- **que** chacun des prismes séparateurs de faisceau (11, 12, 13) a une première, une deuxième et une troisième face de prisme (F1, F2, F3) et une couche dichroïque (1, 2, 3) est prévue sur ou parallèlement à chacune des deuxièmes faces de prisme (F2) des prismes séparateurs de faisceau (11, 12, 13),
- **que** les premières faces de prisme (F1) des prismes séparateurs de faisceau (11, 12, 13) pointent dans la même direction et sont alignées parallèlement les unes aux autres à angle droit par rapport à un axe optique (A) passant par les première et seconde faces de prisme (F1, F2) des prismes séparateurs de faisceau (11, 12, 13),
- **que** les première et deuxième faces de prisme (F1, F2) des prismes séparateurs de faisceau (11, 12, 13) sont chacune alignées à des premiers angles aigus l'une par rapport à l'autre, les deuxième et troisième faces de prisme (F2, F3) des prismes de séparateurs de faisceau (11, 12, 13) sont chacune alignées à des deuxièmes angles droits ou obtus l'une par rapport à l'autre, et les troisième et première faces de prisme (F3, F1) des prismes de division de faisceau (11, 12, 13) sont chacune alignées à des troisièmes angles aigus l'une par rapport à l'autre, et
- **qu'**à chacun des prismes séparateurs de faisceau (11, 12, 13) est associé un élément de compensation prismatique (21, 22, 23) avec une première et une deuxième surface prismatique (F1', F2'), la deuxième surface prismatique (F2') de chacun des éléments de compensation (21, 22, 23) étant disposée dans un plan commun avec la deuxième surface prismatique (F2) du prisme séparateur de faisceau (11, 12, 13) respectivement associé ou parallèlement à celle-ci.

2. Système de microscope (300) selon la revendication 1, qui comprend un objectif (103) et une optique de tube (106) disposée sur le côté image de l'objectif (103), dans lequel un trajet de faisceau infini (U) est formé entre l'objectif (103) et l'optique de tube (106) et l'optique de tube (106) focalise la lumière du trajet de faisceau infini (U) dans un plan image (108, 208) qui est disposé sur le côté image de l'optique de tube (106) et est conjugué à un plan objet (104).

3. Système de microscope (200, 300) selon la revendication 2, comprenant un système d'éclairage à grand champ (140) et un système de détection à grand champ (150) pour l'éclairage de zone et la détection d'une région du plan objet (104).

4. Système de microscope (200, 300) selon la revendication 3, dans lequel le système d'éclairage à grand champ (140) comprend un miroir diviseur (102) disposé dans le trajet du faisceau infini (U), qui couple la lumière d'une source lumineuse (141) dans le trajet du faisceau infini (U) entre l'objectif (103) et l'optique du tube (106) ou dans un autre trajet du faisceau infini.

5. Système de microscope (300) selon l'une quelconque des revendications 1 à 4, comprenant un système d'éclairage confocal (160) et un système de détection confocal (170) pour le balayage ponctuel d'une région du plan objet (104).

6. Système de microscope (300) selon la revendication 5, dans lequel le système d'éclairage confocal (160) comprend une source ponctuelle (161) dans un plan conjugué au plan objet (104) et au plan image (208), et dans lequel le système de détection confocal (170) comprend un trou d'épingle (212) dans le plan conjugué au plan objet (104) et au plan image (208) ou dans un autre plan conjugué au plan objet (104) et au plan image (208).

7. Système de microscope (300) selon la revendication 5 ou 6, dans lequel le système d'éclairage confocal (160) comprend un moyen de balayage (210) pour dévier la lumière d'éclairage.

8. Système de microscope (300) selon l'une quelconque des revendications 5 à 7, comprenant la pluralité d'unités de détection (10, 20) comprenant la première unité de détection (10) et l'au moins une deuxième unité de détection (20), dont la première unité de détection (10) est associée au système de détection grand champ (150) et l'au moins une deuxième unité de détection (20) est associée au système de détection confocal (170).

9. Système de microscope (300) selon l'une quelconque des revendications 5 à 8, dans lequel un miroir de commutation (301) pouvant être disposé dans deux positions est prévu du côté image de l'optique tubulaire (106), la lumière étant irradiée dans le système de détection à grand champ (150) dans une première position du miroir de commutation (301) et la lumière étant irradiée dans le système de détection confocal (170) dans une deuxième position du miroir de commutation.

**10.** Système de microscope (200, 300) selon l'une quelconque des revendications précédentes, dans lequel, dans les prismes de division de faisceau (11, 12, 13), les premiers angles ont des amplitudes angulaires identiques, les deuxièmes angles ont des amplitudes angulaires identiques et les troisièmes angles ont des amplitudes angulaires identiques.

**11.** Système de microscope (200, 300) selon la revendication 10, dans lequel les premiers angles sont chacun de 30°, les seconds angles sont chacun de 90°, et les troisièmes angles sont chacun de 60°, ou dans lequel les premiers angles sont chacun de 22,5°, les seconds angles sont chacun de 112,5°, et les troisièmes angles sont chacun de 45°.

**12.** Système de microscope (200, 300) selon l'une quelconque des revendications précédentes, dans lequel les prismes séparateurs de faisceau (11, 12, 13) sont chacun conçus comme des prismes de Bauernfeind avec des angles de prisme identiques.

**13.** Système de microscope (200, 300) selon l'une quelconque des revendications précédentes, dans lequel les prismes séparateurs de faisceau (11, 12, 13) ont des volumes mutuellement différents.

**14.** Système de microscope (200, 300) selon l'une quelconque des revendications précédentes, dans lequel la première unité de détection (10) ou chacune de la pluralité d'unités de détection (10, 20) comprend un boîtier (120) avec une entrée (121) qui est détachable d'une sortie de détection d'un microscope (200) sans outils.

**15.** Système de microscope (200, 300) selon l'une quelconque des revendications précédentes, dans lequel les prismes séparateurs de faisceau (11, 12, 13) de la première unité de détection (10) ou de chacune de la pluralité d'unités de détection (10, 20) comprennent un premier, un deuxième et un troisième prisme séparateur de faisceau (13), dans lequel l'axe optique (A) entre dans le dispositif séparateur de faisceau (100) perpendiculairement à la première face de prisme (F1) du premier prisme séparateur de faisceau (11) et sort du dispositif séparateur de faisceau (100) perpendiculairement à la première face de prisme (F1') de l'élément compensateur (23) associé au troisième prisme séparateur de faisceau (13), dans lequel la lumière multichromatique (L), qui est irradié le long de l'axe optique (A) dans le dispositif séparateur de faisceau (100) est divisé en composantes spectrales (L1-L6) au moyen des couches dichroïques (1, 2, 3), une des composantes spectrales (L6) étant émise par la première face de prisme (F1') de l'élément compensateur (23) qui est attribuée au troisième prisme séparateur de faisceau (13) par le dispositif séparateur de faisceau (100), et d'autres des composantes spectrales (L1, L3, L5) étant émises par le dispositif séparateur de faisceau (100) via les troisièmes surfaces de prisme (F3) du premier, du deuxième et du troisième prisme séparateur de faisceau (11, 12, 13), respectivement.

**16.** Système de microscope (200, 300) selon la revendication 15, dans lequel, dans la première unité de détection (10) ou dans chacune des plusieurs unités de détection (10, 20), à chaque fois la première surface de prisme (F1') de l'élément de compensation (23) associé au troisième prisme séparateur de faisceau (13) et les troisièmes surfaces de prisme (F3) des prismes séparateurs de faisceau (11, 12, 13) sont suivies chacune d'une sortie (122) pour la fixation d'un détecteur (130, 130') et/ou d'un détecteur (130, 130').

**17.** Système de microscope (200, 300) selon l'une quelconque des revendications précédentes, dans lequel les éléments de compensation (21, 22, 23) sont conçus de telle sorte que les composantes spectrales de la lumière multichromatique dans le dispositif de séparation des faisceaux de couleur (100) parcourent chacune des trajectoires de verre dont les longueurs ne diffèrent pas de plus d'une quantité prédéterminée.

**18.** Procédé d'imagerie microscopique utilisant un système de microscope (200, 300) avec une unité de détection (10) ou avec plusieurs unités de détection (10, 20) comprenant une première unité de détection (10) et au moins une deuxième unité de détection (20), **caractérisé en ce qu'**un système de microscope (200, 300) selon l'une des revendications précédentes, dans lequel une lumière multichromatique est émise au moyen du système de microscope (200, 300) dans la première unité de détection (10) ou dans chacune des plusieurs unités de détection (10, 20) et est divisée en différentes composantes spectrales, les composantes spectrales étant chacune détectées par des détecteurs (130, 130').

**19.** Procédé selon la revendication 18, dans lequel un système de microscope (300) est utilisé ayant un système d'éclairage à grand champ (140) et un système de détection à grand champ (150) pour l'éclairage de zone et la détection d'une région du plan objet (104), et un système d'éclairage confocal (160) et un système de détection confocal (170) pour le balayage ponctuel d'une région du plan objet (104), le procédé comprenant un mode de fonctionnement à grand champ et un mode de fonctionnement confocal commutés entre eux selon une spécification de l'utilisateur.

**20.** Procédé selon la revendication 18 ou 19, dans lequel les différentes composantes spectrales détectées par les détecteurs (130, 130') sont au moins partiellement traitées au moyen d'une unité de calcul.

**21.** Procédé selon la revendication 20, dans lequel le traitement des différentes composantes spectrales comprend l'enregistrement et la superposition d'au moins une partie des différentes composantes spectrales.

**22.** Procédé selon la revendication 19, dans lequel des données d'écart de position sont fournies pour au moins une partie des différentes composantes spectrales et sont utilisées pour l'enregistrement.

**23.** Procédé de l'une quelconque des revendications 20 à 22, dans lequel le traitement des différentes composantes spectrales comprend une évaluation des données.

**24.** Procédé selon la revendication 23, dans lequel un ou plusieurs paramètres de détection et/ou d'éclairage du système de microscope (200, 300) et/ou un ou plusieurs paramètres de détection d'au moins un des détecteurs (130, 130') sont ajustés sur la base de l'évaluation des données.

**25.** Procédé de l'une quelconque des revendications 20 à 24, dans lequel le traitement des différentes composantes spectrales comprend un démixage spectral.

**26.** Procédé de la revendication 25, dans lequel les différentes composantes spectrales sont détectées sous la forme de données de pixel et/ou dans lequel le traitement comprend la génération de données de pixel, dans lequel un contenu d'un ou plusieurs pixels dont le spectre est causé uniquement par la contribution d'exactement un fluorophore est déterminé dans les données de pixel et ceci est utilisé comme une valeur de référence pour le démélange spectral.

# Fig. 1

**Fig. 2**

EP 3 721 279 B1

**Fig. 3**

EP 3 721 279 B1

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016166374 A1
- WO 2016166375 A1
- US 3659918 A
- US 4084180 A
- US 20090323192 A1
- DE 102008062791 A1
- US 8988564 B2
- DE 2446923 A1

**In der Beschreibung aufgeführte Nicht-Patentliteratur**

- Disk-Scanning Confocal Microscopy. **TOOMRE, D. ; PAWLEY, J.B.** Handbook of Biological Confocal Microscopy. Springer-Verlag, 2006
- The Intermediate Optical System of Laser-Scanning Confocal Microscopes. **STELZER, E.H.K.** Handbook of Biological Confocal Microscopy. Springer-Verlag, 2006